# EUROPEAN PATENT SPECIFICATION

(11) **EP 2 488 914 B1**
(45) Date of publication and mention of the grant of the patent: **07.02.2018**
(21) Application number: 09850418.6
(22) Date of filing: 16.10.2009
(51) Int. Cl.: G02F 1/13357, G02F 1/1335, G02F 1/1333

(54) **LIQUID CRYSTAL DISPLAY**
FLÜSSIGKRISTALLANZEIGE
DISPOSITIF D'AFFICHAGE À CRISTAUX LIQUIDES

(43) Date of publication of application: 22.08.2012
(73) Proprietor: LG Electronics Inc., Seoul 150-721 (KR)
(72) Inventor: BAE, Seung Choon, Pyeongtaek-si Gyeonggi-do 451-731 (KR); KIM, Seungse, Pyeongtaek-si Gyeonggi-do 451-731 (KR); HUR, Hoon, Pyeongtaek-si Gyeonggi-do 451-731 (KR)
(74) Representative: Frenkel, Matthias Alexander
(86) International application number: PCT/KR2009/005992
(87) International publication number: WO 2011/046242

(56) References cited:
- EP-A1- 2 330 338
- WO-A1-2010/147290
- JP-A- 2004 206 916
- JP-A- 2005 317 480
- JP-A- 2008 108 622
- JP-A- 2008 192 395

## Description

### Technical Field

The present invention relates to a liquid crystal display.

### Background Art

In general, of display devices, LCD (Liquid Crystal Display Device) has various applications, starting from television sets, to laptop computers, monitors for desk top computers, and cellular phones.

Since the LCD can not emit a light for itself, in order to display image information, a light emitting device is required for illumination of a liquid crystal display panel.

Since the light emitting device for the LCD is coupled to a back side of the liquid crystal display panel, the light emitting device is called as a back- light unit that forms a facial light source for providing a light to the liquid crystal display panel.

A general back-light unit is provided with a light source, a light plate, diffusion sheets, a prism, a protective sheet, and so on. As the light source, fluorescent lamps, such as mercury cold cathode fluorescent lamps, light emitting diodes, or the like can be used.
JP 2008 192395 A discloses a lighting system comprising a plurality of surface light boards. Each light board comprises a light source equipped with a flexible printed circuit board, a light guide section, and an extended part in which the light source is installed. The lighting system is driven by a display control circuit and comprises a frame with two or more holes.

### Disclosure of Invention

### Technical Problem

The thickness of the back-light unit should be reduced for slim LCD. And if the back-light unit becomes modules piece by piece, the back-light unit can be driven partially by a module and can provide high contrast ratio.

### Solution to Problem

The present invention relates to a liquid crystal display device using the same.

A liquid crystal display according to claim 1 is provided.

### Advantageous Effects of Invention

Since the assembly of the plurality of back-light unit modules is made to be easy according to the described structure, a production cost may be reduced.

Moreover, the back-light unit by using the light guide plate may enable to reduce a thickness of the back-light unit, leading to reduction of a total thickness of the display device.

Thus by forming the gap of the air layer between the light guide plate and optical sheet with the projection of the light guide plate, an optical unevenness taking place at a boundary of adjacent light guide plates can be reduced.

Moreover, by connecting the light guide plate and the reflection plate in a tiling fashion, reliability of the large sized back- light unit can be improved, and local dimming in which the light source is driven partially according to an image can be applicable, enabling to produce an image of a high contrast ratio.

The liquid crystal display device can maximize a performance by using the backlight unit in accordance with one of the embodiments of the present invention.

According to this, in case the back-light unit is fabricated by connecting the plurality of modules side by side, a substantially uniform light can be formed by decreasing optical singular point at the interconnected part.

### Brief Description of Drawings

The accompanying drawings, which are included to provide a further understanding of the disclosure and are incorporated in and constitute a part of this application, illustrate comparative examples and embodiment(s) of the disclosure and together with the description serve to explain the principle of the disclosure. In the drawings:
FIG. 1 illustrates a side view of a back- light unit in accordance with a first comparative Example, schematically.
FIG. 2 illustrates an exploded view of the back- light unit in FIG. 1.
FIG. 3 illustrates a side view of an assembly of a back- light unit in accordance with a comparative Example, schematically.
FIG. 4 illustrates an exploded view of the assembly of the back-light unit in FIG. 3.
FIG. 5 illustrates an exploded view of a back-light unit in accordance with a first comparative Example.
FIG. 6 illustrates a side view of the back-light unit in FIG. 5 seen from A.
FIG. 7 illustrates a side view of the back-light unit in FIG. 5 seen from B.
FIG. 8 illustrates a section of a light guide portion.
FIGS. 9 and 10 illustrate steps of coupling of a light guide portion in accordance with a first comparative Example, schematically.
FIG. 11 illustrates an exploded perspective view showing coupling of back-light unit modules in accordance with a first comparative Example.
FIG. 12 illustrates a side view of a back-light unit in accordance with a second comparative Example, schematically.
FIG. 13 illustrates a side view of a back-light unit in accordance with a third comparative Example, schematically.
FIGS. 14 ∼ 21 illustrate diagrams each showing a structure of a back-light unit in accordance with a fourth comparative Example.
FIGS. 22 ∼ 27 illustrate diagrams each showing a structure of a back-light unit in accordance with a fifth comparative Example.
FIGS. 28 ∼ 33 illustrate diagrams each showing a structure of a back-light unit in accordance with a sixth comparative Example.
FIG. 34 is a sectional view illustrating a LED backlight unit of a LCD according to a first embodiment of the present invention;
FIG. 35 is a diagram illustrating an LED backlight module of the LED backlight unit shown in FIG. 34 and a circuit board of the LED backlight module;
FIG. 36 is a plane view illustrating two examples of a frame composing the LCD;
FIG. 37 is a plane view illustrating the frame composing the LCD;
FIG. 38 is an exploded view illustrating a LCD including an LED backlight unit according to a second embodiment of the present invention;
FIG. 39 is a sectional view illustrating a liquid crystal panel according to the second embodiment; and
FIG. 40 is a block view illustrating LCD TV including the LCD according to the second embodiment.

### Best Mode for Carrying out the Invention

Reference will now be made in detail to the specific embodiments of the present invention, examples of which are illustrated in the accompanying drawings. Wherever possible, the same reference numbers will be used throughout the drawings to refer to the same or like parts.

The terms "module", "portion", and "part" on elements of the present invention used in description hereafter are ones given or used together with others only taking easiness of writing the specification into account, and are not distinctive in definitions between themselves, or in functions.

Though the present invention has variations and modifications, specific embodiment thereof will be illustrated with drawings. However, the present invention is not intended to limit the present invention to a specific one disclosed herein, and contrary to this, the present invention includes all modifications, substitutions, equivalences thereof in agreement of the aspect of the present invention defined by the claims of the present invention.

In a case it is described that an element, like a layer, a region, or a substrate, is "on" other element, it is understandable that the element is on the other element directly, or there may be another intermediate element between the two elements.

It will be understood that the words intend to include other directions in addition to a direction described in the drawings. Finally, the word of 'directly' means that there is no other element disposed inbetween. The words of 'and/or' as is used herein include one or more than one or all combinations of written items.

It will be also understood that although the terms first, second, and so forth are used herein to describe various regions, layers and/or sections, these regions, layers and/or sections should not be limited by these terms.

### <A FIRST COMPARATIVE EXAMPLE>

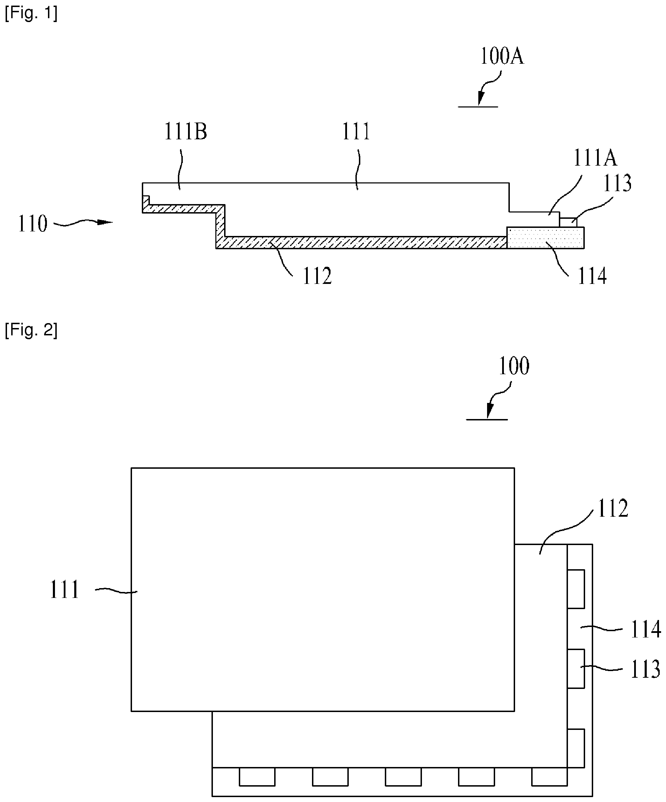

FIG. 1 illustrates a side view of a back-light unit in accordance with a first comparative Example schematically, and FIG. 2 illustrates an exploded view of the back-light unit in FIG. 1.

Referring to FIGS. 1 and 2, the back-light unit 100A includes a light guide plate 111, a reflection plate 112 on an underside of the light guide plate 111, and a light source 113. The light source 113, the light guide plate 111 and the reflection plate 112 together may be called as a light guide part 110, a LED backlight module 110 or a module 110.

A unit including the light guide part 110, the LED backlight module 110 or the module 110 may be referenced to as an LED backlight unit as follows.

Light emitting diodes (LEDs) may be used as the light source 113 and the light guide plate 111 includes an light incidence part 111A formed at a portion of the light guide plate 111 where a light is incident thereto from the LED 113, and the other side (opposite to the light light incidence part 111A) edge 111B which is stepped.

Referring to FIGS. 1 and 2, the light light incidence part 111A is projected from the light guide plate 111 in a side direction, and, if the light light incidence part 111A is projected from the light guide plate 111 in the side direction thus, the light source 113 can be arranged at an edge of the light light incidence part 111A on the circuit board 114.

The reflection plate 112 on the light guide plate 111 is on the underside of the light guide plate 111 and an underside of the other edge 111B of the light light incidence part 111A. In addition to this, the reflection plate 112 may cover sides of the light guide plate 111.

The light source 113 and the circuit board 114 may be positioned on a first side which is a light light incidence part 111A side of the light guide plate 111, or on the first side and a second side which is substantially perpendicular to the first side such that the light is incident to the light guide plate 111 from the LED 113 in two directions.

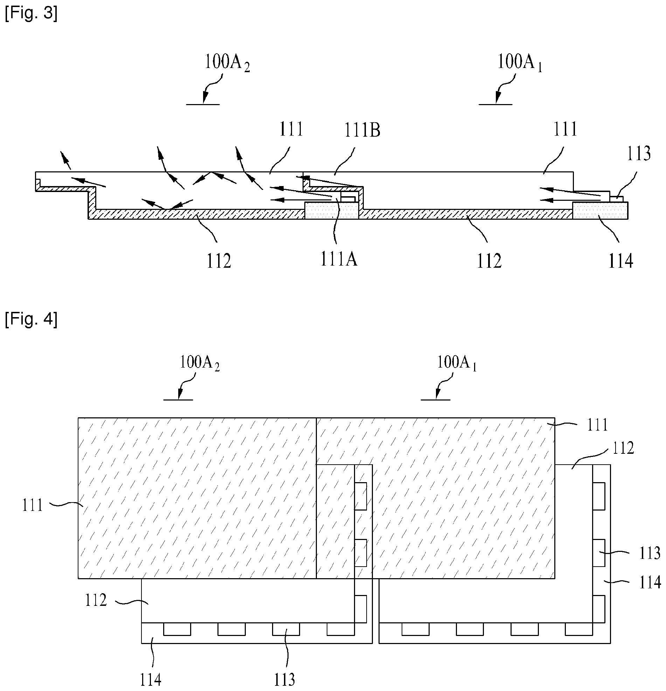

A plurality of the light guide portions 110 each including the light guide plate 111 and the reflection plate 112 shown in FIGS. 1 and 2 may be arranged as shown in FIGS. 3 and 4 to form a full set of a back-light unit 100A₁ or 100A₂.

For convenience's sake, referring to FIGS. 3 and 4, a right side back-light unit 100A will be called as a first module A₁, and a left side back-light unit 100A will be called as a second module A₂.

Referring to FIGS. 3 and 4, the first module 100A₁ and the second module 100A₂ are coupled such that the other edge 111B opposite to the light light incidence part of the first module A₁ covers the light light incidence part 111A of the second module A₂.

This is for preventing the light from the LED 113 at the light light incidence part 111A of the first module 100A₁ from leaking to an outside of the back-light unit.

By arranging the other edge 111B of the first module 100A₁ coupled to the light light incidence part 111A of the second module 100A₂, a function of the light guide plate 111 as well as a function of covering the LED 113 of the second module 100A₂ can be performed. That is, the light from the LED 113 of the second module 100A₂ is not exposed, directly.

Owing to above configuration, the light from the second module 100A₂ advances along a side of the light guide plate 111 of the second module A₂, and comes out of an outside surface of the light guide plate 111 uniformly.

The reflection plate 112 of the second module 100A₂ can improve light efficiency of the light comes out of the outside surface of the light guide plate 111 thus. That is, the light from the LED 113 of the second module A₂ advances along the side of the light guide plate 111A, and the reflection plate 112 of the first module 100A₁ over the light light incidence part 111A adjacent to the light light incidence part 111A assists such advance of the light.

By arranging the back-light units 100A each having the light guide plate 111 and the reflection plate 112 in a tiling fashion, a large sized back-light unit 100A can be fabricated, which can be used in TV sets, sign boards with lamps, and so on.

Thus, by projecting the light light incidence part 111A from a light forwarding surface extensively, relatively dark portions shown on a portion caused by gaps between each of the LEDs 113 can be decreased and direct leakage of the light from the LEDs 113 through connected portion between each of the light guide plates 111 can be prevented or substantially reduced.

Though the light can transmit from one light guide plate 111 to an adjacent light guide plate 111 through the other edge 111B of the light light incidence part 111A, by not placing the reflection plate 112 between the adjacent light guide plates 111 to shield the light transmission completely, but by permitting the light to transmit through the adjacent light guide plates 111, formation of the relatively dark portions (shadow images) caused by a step between the light light incidence part 111A and the adjacent edge 111B of the light guide plate 111 can be prevented or substantially reduced.

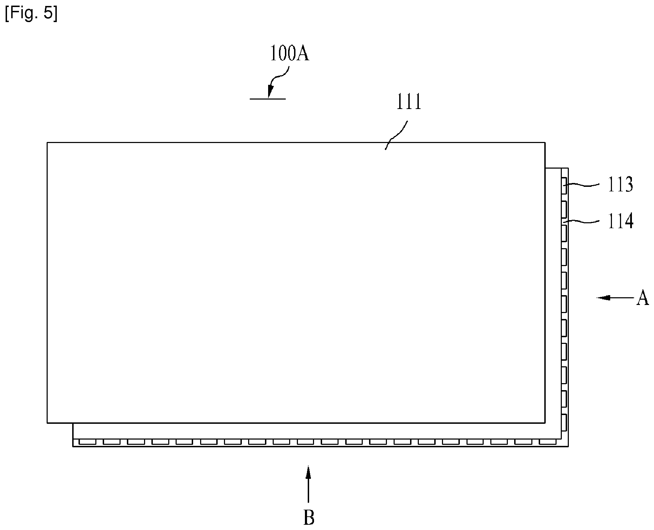

FIGS. 5 to 7 illustrate the back-light unit in more detail, each showing a state in which the LED 113 on the circuit board 114 is in contact with the light guide plate 111.

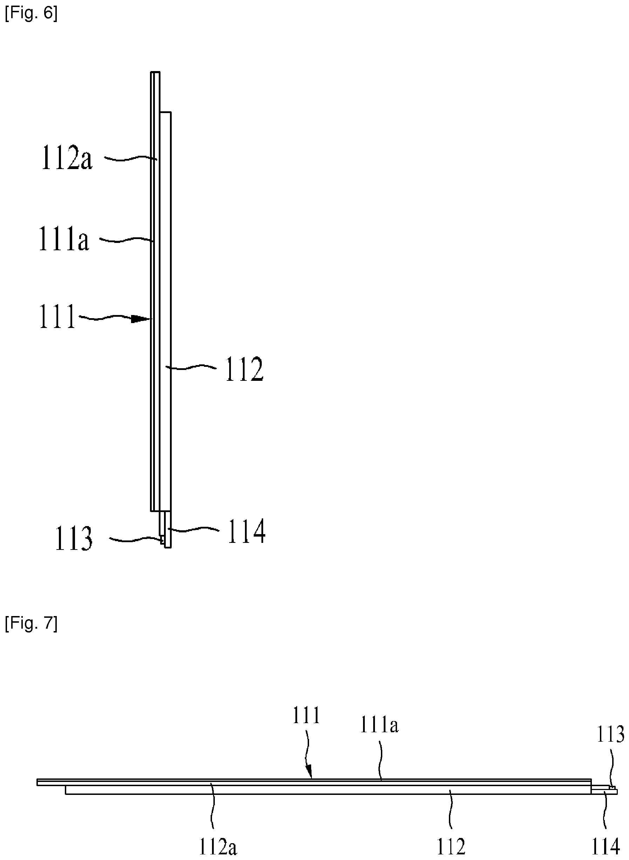

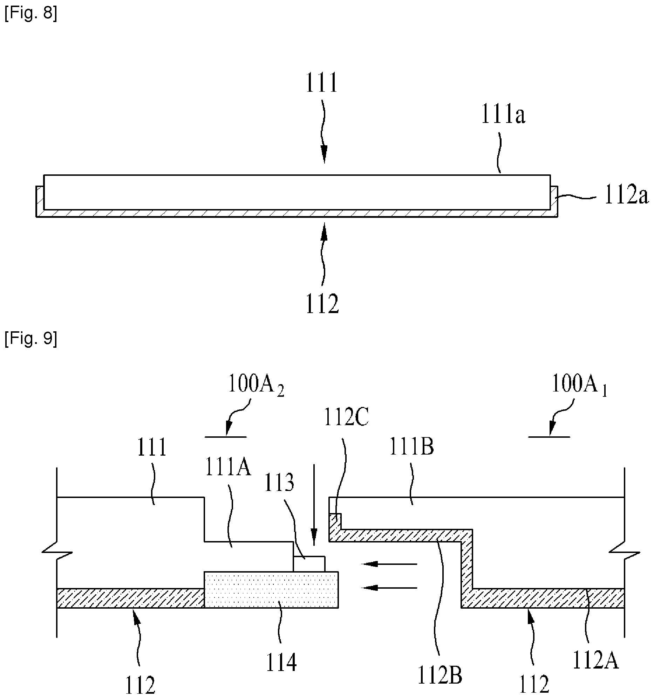

Referring to FIGS. 6 and 7, the reflection plate 112 is arranged, not only on an underside of the light guide plate 111, but also on sides of light guide plate 111 as a rim 112a of the reflection plate 112 such that a portion of the light guide plate 111 is exposed and rest of the light guide plate 111 is covered by the rim 112a. That is, a section as shown in FIG. 8 is made.

Or, depending on cases, the reflection plate 112 may be folded at the sides of the light guide plate 111 more than one time.

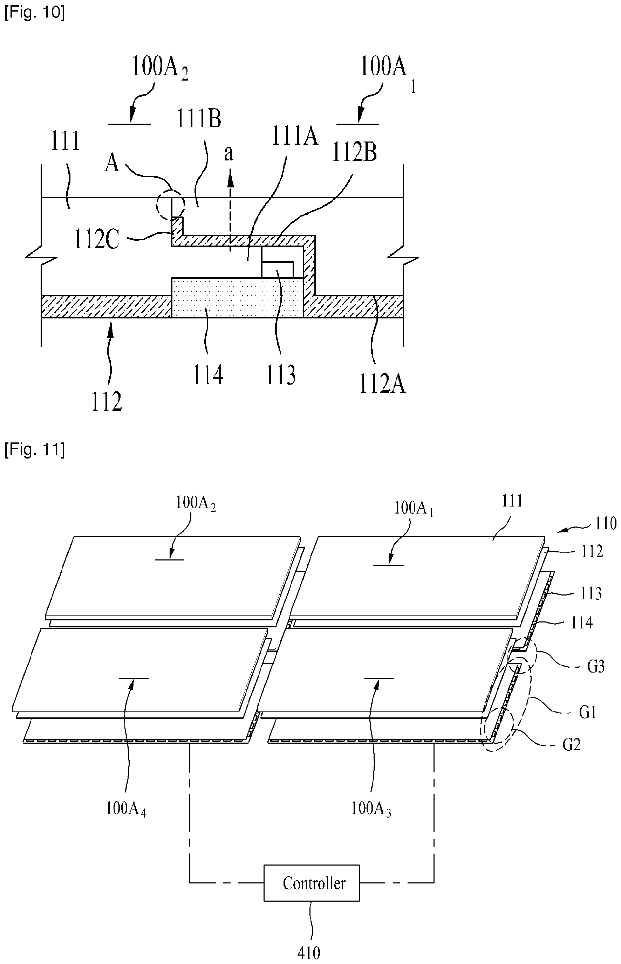

Coupling to the modules 100A₁ and 100A₂ can be made as shown in FIGS. 9 and 10.

That is, in a state the LED 113 of the second module A₂ is coupled to the light light incidence part 111A of the light guide plate 111 with the LED 113 in contact with the light light incidence part 111A, the edge 111B of the first module A₁ is coupled to the light light incidence part 111A of the second module A₂ adjacent thereto.

According to this, the edge 111B of the first module 100A₁ having the reflection plate 112 attached thereto is positioned over the LED 113 of the second module A₂, such that the light from the LED 113 of the second module A₂ is not exposed to an upper side, but incident on the light light incidence part 111A, transmits through the light guide plate 111 and comes out of the light guide plate 111.

In this instance, the reflection plate 112B on the underside of the other edge of the light light incidence part 111A and an edge 112C of the reflection plate 112B extended therefrom can shield at least a portion of the light guide plate 111, optically.

In other words, though the first module A₁ and the second module A₂ are coupled together optically, enabling the light to transmit from the second module 100A₂ to the first module A₁, and vice versa, a portion of the light can be shielded.

That is, a portion of the light from the second module A₂ to the edge 111B of the first module A₁ can be shielded by the edge 112c of the reflection plate of the first module 100A₁, at least preventing a brighter line from forming at a boundary of the modules A ₁ and A₂. However, adjacent modules are made to be connected with a connection portion A over the edge 112c of the reflection plate optically, formation of a relatively dark line can be prevented or decreased.

Referring to FIG. 11, by arranging a plurality of the modules 100A₁, 100A₂, 100A₃, and 100A₄ each having the light guide plate 111 and the reflection plate 112, a set of a back-light unit 100A can be fabricated.

The circuit board 114 and the LEDs 113 are arranged on one or two sides of the light guide portion 110, and a plurality of the modules 100A₁, 100A₂, 100A₃, and 100A₄ each having the light guide plate 111 and the reflection plate 112, to fabricate a set of a back-light unit 100A.

The back-light unit 100A having the plurality of the modules 100A₁, 100A₂, 100A₃, and 100A₄ or the plurality of the LEDs connected thereto may be driven by a driving unit 410 independently or in groups with the back-light unit 100A divided into groups of predefined number of LEDs depending on cases, enabling to reduce power consumption, significantly.

That is, the driving unit 410 independently controls the brightness of the light source (LEDs) 113 of each of the light guide portions 110.

That is, the circuit board of the light source composing each of the LED backlight modules 100A₁, 100A₂, 100A₃ and 100A₄ may be controlled independently, in other words, dividedly driven or each of the LEDs mounted on a single circuit boar may be dividedly driven.

Also, a unit set of entire LED set defining a single side of each module is grouped to a unit group and driven to this group unit. Or, a predetermined number of LEDS composing a single side of each module is grouped to a sub-group set and driven to this sub-group unit.

Such the divided operation may enable a larger contrast ration and reduces electricity consumption as much as possible.

The brightness of the light source 113 of each of the light guide portions 110 is controlled according to image data associated with the light source 113. The image data is in relation to images displayed on a display panel, such as a liquid crystal display panel. For example, if the image data has dark images, a group of light source 113 in relation to the dark images can be turned out or dimmed, and if the image data has bright images, a group of light source 113 in relation to the bright images can be driving more brightly. As a result, the contrast ratio of the images is increased or improved.

In this instance, the unit of driving by the controller 410 may be a set of all LEDs in an individual module, an individual LED, or a set of LEDs grouped within each of the module (logical group).

That is, the LEDs may be driven as a unit of a group of all LEDs set G1 located along a side of each module, or as a unit of a sub group of LED set G2 within the set G1. In some case, the unit can be a logical group G3 (as a unit of driving) which comprises LEDs (or an LED) located in a module 100A₁ and LEDs (or an LED) located in the adjacent module 100A₂.

In other words, the light source 113 of the light guide portion 110 includes groups (G1, G2, or G3) of LEDs, and the controller 410 independently controls brightness of each group of the LEDs 113.

Thus, as described, in the back-light unit in accordance with the first comparative Example, small sized light guide plates are formed, and the LEDs are attached to a side of each of the light guide plates, for securing a light quantity and dispersing heat, and particularly, LEDs at the side of the light guide plate can be hidden, optically.

Moreover, the back-light unit permits to arrange the LEDs between the light guide plates as an entire area of the display can be covered with the small sized light guide plate modules, and to use the same light guide plate regardless of a size of the display.

In the meantime, fabrication of the large sized display by connecting the light guide plates fabricated as modules piece by piece in a tiling fashion enables to standardize parts since the same part can be applied to various sized TV sets by varying a number of modules only.

### <A SECOND COMPARATIVE EXAMPLE>

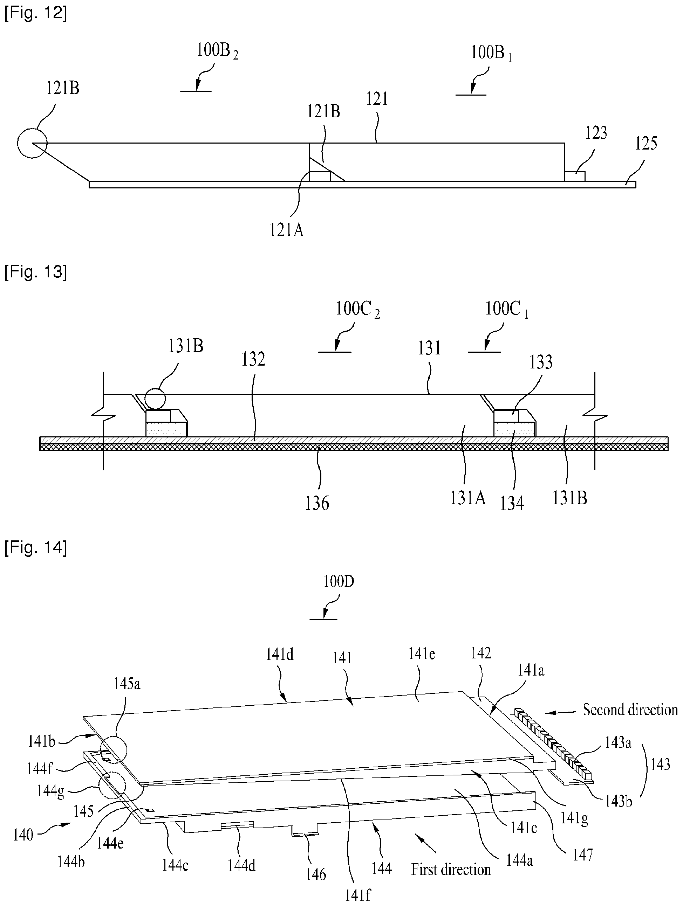

Referring to FIG. 12, the back-light unit 100B in accordance with a second comparative Example includes a light guide plate 121, a back panel (or a frame) 125 under the light guide plate 121 and a light source 123.

A plurality of modules 100B₁ and 100B₂ each having the light guide plate 121 are arranged on a plane to form a full set of the back-light unit 100B.

For convenience s sake, a right side module 100B will be called as a first module 100B₁, and a left side module 100B will be called as a second module 100B₂.

That is, a back light portion 121B of the light guide plate 121 of the first module 100B₁ is coupled to a light light incidence part 121A of the second module 100B₂ adjacent thereto in a position of covering the light light incidence part 121A. This is for preventing the light from the LED 123 at the light light incidence part 121A of the second module 100B₂ adjacent thereto from leaking to an outside of the back-light unit.

In order to connect the light guide plate 121 of the first module 100B₁ and light guide plate 121 of the second module 100B₂ adjacent thereto in a tiling fashion, the LED 123 is located on a lower side of a connection portion, i.e., on a lower side of an edge 121B of the light guide plate 121.

Therefore, it is provided to secure a space for placing the LED 123, which may be selected according to optical characteristics of a structure of the light guide plate 121.

That is, referring to FIG. 12, different from the first comparative Example, the edge 121B of the light guide plate 121 is triangular, and the LED 123 may be placed on the lower side of the edge 121B. In this instance, instead of a separate circuit board, the light guide plate 121 and the LED 123 may be mounted to one frame 125 having circuits formed thereon.

Parts not explained herein may be identical to the first comparative Example.

### <A THIRD COMPARATIVE EXAMPLE>

Referring to FIG. 13, a back-light unit 100D in accordance with a third comparative Example includes a light source portion 130 having a light guide plate 131 and a reflection plate 132 on an underside of the light guide plate 131, a light source 133, and a circuit board 134 having the light source 133 mounted thereto.

Referring to FIG. 13, there are a plurality of modules 100C₁ and 100C₂ each having the light guide plate 131 arranged on a plane to form a full set of a back-light unit 100C.

Referring to FIG. 13, for convenience's sake, a right side back-light unit 100C will be called as a first back-light unit 100C₁ and a left side back-light unit 100C will be called as a second back-light unit 100C₂.

In order to connect the light guide plate 131 of the first back-light unit 100C₁ to the light guide plate 131 of the second module 100C₂ in a tiling fashion, the LED 133 is located on a lower side of a connection portion, i.e., on a lower side of the edge 131B.

According to this, it is provided to secure a space for placing the LED 133 therein, by selecting the space according to optical characteristic of a structure of the light guide plate 131.

The structure may have a sloped back light portion 131B of the first module 100C₁ in contact with the second module C₂. In this instance, the LED 133 is mounted to a separate circuit board, and the reflection plate 132 and the frame 136 may be positioned under the light guide plate 131.

As shown in FIG. 13, the plurality of light guide plates may be provided on a single reflection, not separate reflection plates corresponding to the light guide plates 131.

Thus, the LED backlight unit mounted to the LCD according to this comparative Example may include X (X > 1) circuit boards, a light source including a plurality of LED light sources 133 arranged on the circuit boards 134, K (K=1, 2, 3., N) light guide plates 131 having a first side surface receiving light emitted from the LEDS 133 thereon and a second side surface facing the first side surface, and P reflection plates 132 provided under the light guide plates 131. at least one of the P(N>P>=1) reflection plates may have the plurality of the light guide plates arranged thereon.

That is, the number (N) of the light guide plates 131 is smaller than the number (P) of the reflection plates 132. As a result, the plural light guide plates may be arranged on at least one reflection plate.

### <A FOURTH COMPARATIVE EXAMPLE>

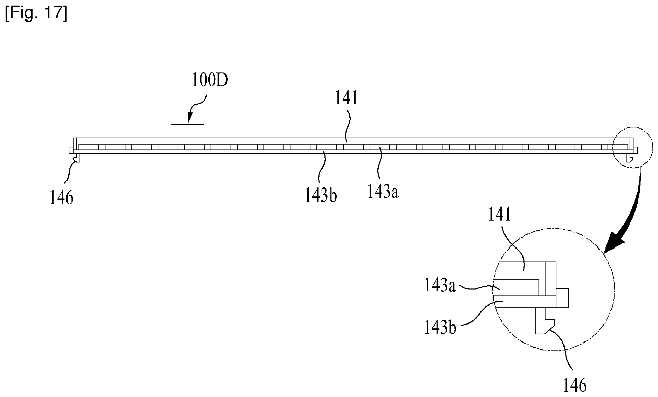

Referring to FIGS. 14 to 17, the back-light unit 100D in accordance with a fourth comparative Example includes a light guide plate 141, a light source 143, and a reflection plate 144. Parts unexplained herein may have things identical to foregoing comparative Examples applied thereto.

The light guide plate 141 and the reflection plate 144 together may be called as a light guide portion 140 or a light guide plate module 140.

The light guide plate 141 has a flat upper side, a sloped lower surface, and a side having a light light incidence part 142 formed thereon.

The light guide plate 141 has opposite first side 141a and a second side 141b, and opposite third side 141c and fourth side 141d. The third side 141c and the fourth side 141d are sides substantially perpendicular to the light light incidence part 142. The light guide plate 141 has an underside surface 141f spaced from or in contact with a light forwarding surface 141e and the reflection plate 144.

The light guide plate 141 has a thickness which becomes the thinner as the thickness goes from the first side 141a to the second side 141b the more, forming the underside of the light guide plate 141 to be sloped, partially or entirely.

The light light incidence part 142 at the first side 141a of the light guide plate 141 may have a thickness thinner than a thickness of the first side 141a of the light guide plate 141. According to this, an upper side of the light light incidence part 142 and an upper side 141e of the light guide plate 141 are positioned on planes different from each other.

Depending on cases, in order to transmit the light sufficiently uniformly throughout the light guide plate 141, a portion of a lower side of the light light incidence part 142 may be formed unevenly.

An upper side of the circuit board 143b of the light source 143 coupled to the underside of the light light incidence part 142 may also be formed unevenly at the same position.

The reflection plate 144 has a rim 147 substantially perpendicular to the light source 143, which may be coupled to at least a portion of the third side 141c and the fourth side 141d of the light guide plate 141.

The light guide plate 141 may have at least one fastening protrusion 145 protruding from an underside periphery as a fastening member for fastening to an upper side 144a of the reflection plate 144.

The fastening protrusion 145 is placed in a fastening recess 144e in the upper side of the reflection plate 144 for maintaining a position even against an external impact or vibration.

As a member for fastening the light guide plate 141 to the reflection plate 144, the light guide plate 141 may have a supplementary (or auxiliary) protrusion 145a from the second side 141b and the reflection plate 144 may have a cut-off portion 144g formed in conformity with the supplementary protrusion 145a.

In the meantime, the light source 143, positioned at a side of the light light incidence part 142 for emitting a light to the light light incidence part 142, may include at least one LED 143a and a circuit board 143b.

The LED 143a is positioned at a side of the light light incidence part 142 for generating and emitting the light to the light light incidence part 142. The circuit board 143b may be coupled to and support undersides of the LED 143a and the light light incidence part 142.

Thus, by projecting the light light incidence part 142 from the side of the light guide plate 141, relatively dark portions between the LEDs 143a can be eliminated or decreased, and direct leakage of the light through connection portion between modules 100D can be prevented.

The reflection plate 144 is coupled to the underside 141f of the light guide plate 141 for reflection of the light to the light guide plate 141, and may cover at least a portion of the second to fourth sides 141b, 141c, and 141d of the light guide plate 141 for preventing the light from transmitting to an outside of the back-light unit or an adjacent light guide plate from the light guide plate 141 at least partially.

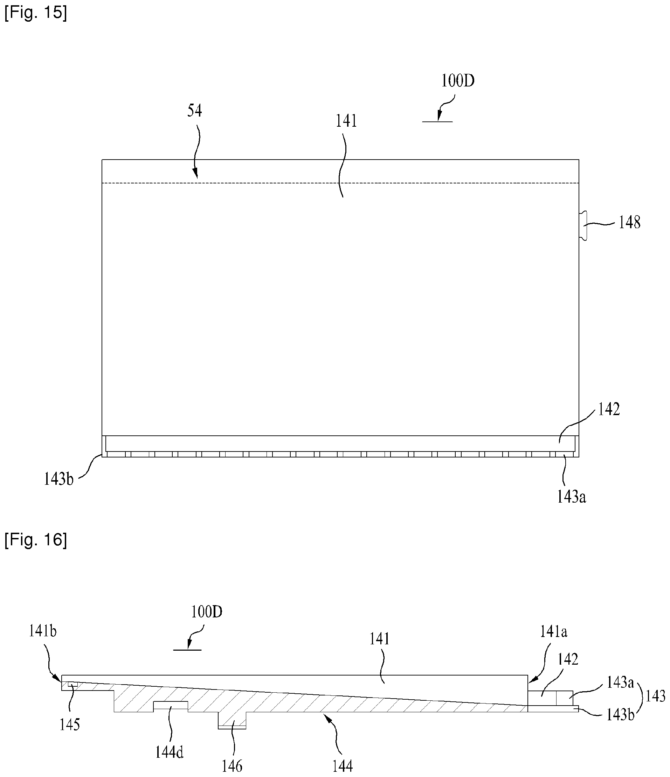

Referring to FIG. 16, an upper side 144a of the reflection plate 144 has a slope opposite to the slope of the underside 141f of the light guide plate 141.

Accordingly, if the reflection plate 144 is placed on the light guide plate 141 such that the upper side 144a of the reflection plate 144 couples to the underside 141f of the light guide plate 141, the underside of the reflection plate 144 and the upper side 141e of the light guide plate 141 are parallel to each other.

That is, the reflection plate 144 has opposite first and second sides, and has a thickness which becomes the thicker as the thickness goes from the first side to the second side the more.

The light source 143 is positioned at the first side of the reflection plate 144, and a cover projection 144c is formed at the second side of the reflection plate 144 for accommodating and covering the light source 143.

The cover projection 144c receives the light source 143 to cover an upper side of the light source 143 of an adjacent module when a plurality of the back-light unit modules are assembled, and may prevent the LED 143a at the light input projection 142 of the light guide plate 141 from showing on a display screen.

As described before, the reflection plate 144 has a rim 147 substantially perpendicular to the light source 143, which may be coupled to at least a portion of the third side 141c and the fourth side 141d of the light guide plate 141, for at least partially preventing the light from transmitting to an adjacent light guide portion 140 from the light guide plate 141 through the third side 141c and the fourth side 141d of the light guide plate 141.

Moreover, if a plurality of the light guide portions 130 or the back-light unit modules are assembled by making the back-light units as modules, the modules can be coupled together as a side hook recess 144d in the reflection plate 144 is placed on a side hook 148 (See FIG. 15) of adjacent module, and the side hook 148 of the reflection plate 144 is placed in the side hook recess 144d in adjacent module.

The side hook 148 and the side hook recess 144d enable easy alignment and assembly of the plurality of modules in a first direction, for example, a transverse (or longitudinal, as seen from the other side) direction.

As a fastening member for fastening the frame (not shown) of the back-light unit, the reflection plate 144 has at least one underside hook 146 at an underside periphery for coupling to the frame (not shown).

The underside hook 146 enables easy fastening of the light guide plate module to the frame without screws.

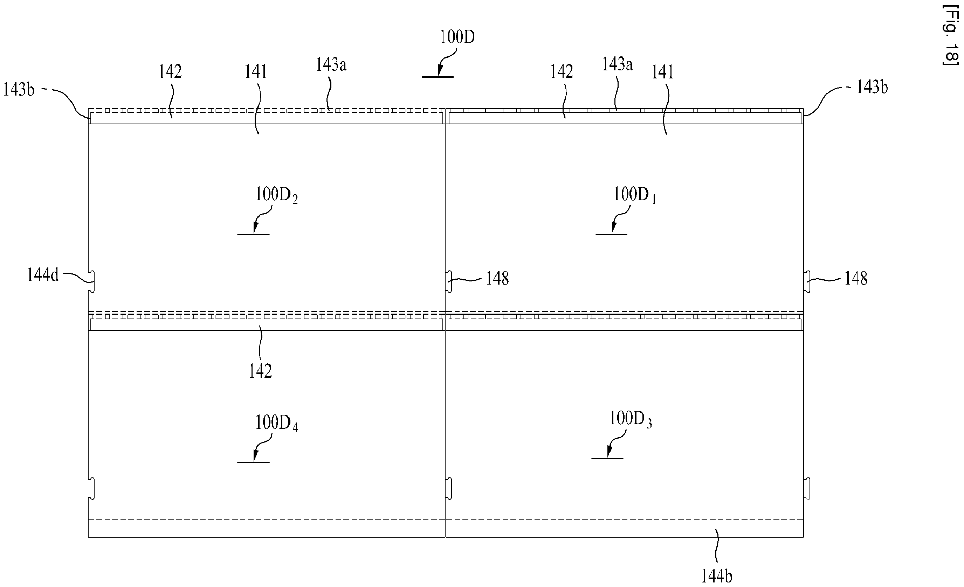

FIG. 18 illustrates a plan view of a large sized back-light unit that is an assembly of a plurality of the back-light unit modules in FIG. 14.

Thus, after fabricating the back-light units as a module, the side hook 148 of a first module 100D₁ is placed in the side hook recess 144d of the second module adjacent thereto, to couple the first and second modules together.

Thus, by connecting other back-light unit modules to left and right sides of one back-light module, a plurality of modules can be fastened in a first direction (transverse direction; See FIG. 14.) on a plane.

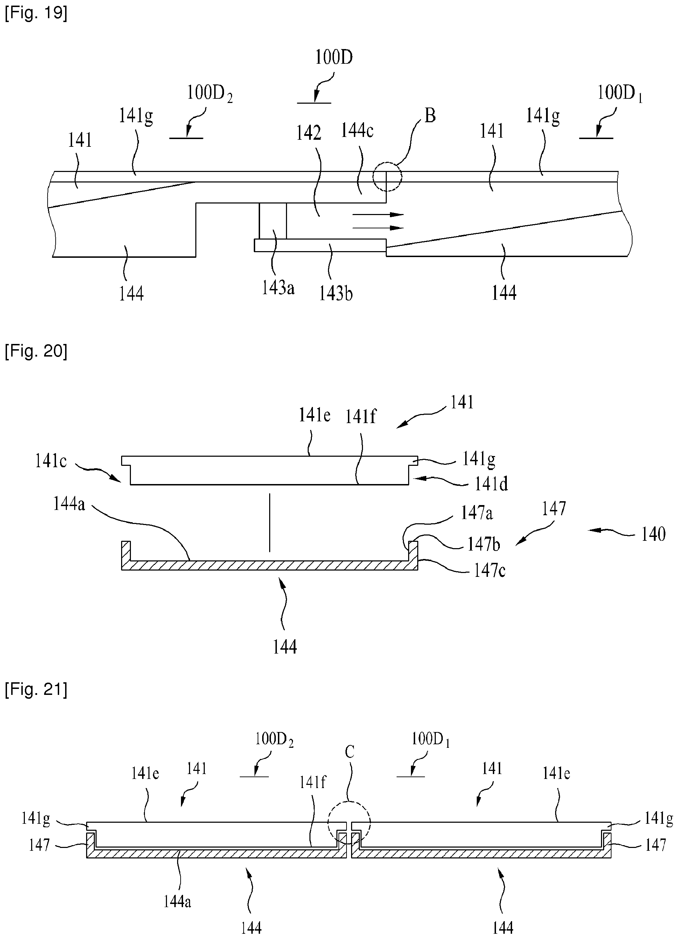

Referring to FIG. 19, modules to be coupled in a second direction (a longitudinal direction; See FIG. 14.) are coupled such that the cover projection 144c of the reflection plate 144 of each of the modules covers the upper side of the LED 143a of the back-light unit module adjacent thereto.

In this instance, at least some of boundaries between the modules (FIG. 19 illustrates a longitudinal direction boundary) may be made to couple a portion of the light optically. That is, portions of a light light incidence part 142 side of the first module 100D₁ and an edge side of the second module 100D₂ can be made to be at least partially shielded by the cover projection 144c of the reflection plate 144, optically.

That is, the cover projection 144c of the reflection plate 144 is configured to reduce light from the corresponding module (the second module 100D₂) passing into an adjacent module (the first module 100D₁).

Therefore, a "B" portion of the boundary of the adjacent modules can be made to be coupled optically, and by adjusting a thickness of the cover projection 144c or a shape of the edge side, an extent of the optical coupling of the modules can be adjusted. Accordingly, the "B" portion is a light transmitting part enabling optical coupling with the adjacent modules.

By adjusting or regulating the extent of the optical coupling, formation of a bright line of which light is stronger than the light from the light output surface 141e of the light guide plate 141 or a relatively dark line of which light is weaker than the light from the light output surface 141e of the light guide plate 141 can be at least partially prevented. According to this, in case the back-light unit is fabricated by connecting the plurality of modules side by side, a substantially uniform light can be formed by decreasing optical singular point at the light forwarding surface or an interconnected part between adjacent modules.

FIGS. 20 and 21 illustrate sections of coupling states of the light guide portions each having the light guide plate 141 and the reflection plate 144, and a transverse direction coupling state of the modules coupled side by side.

As described before, though most of area of the underside 141f of the light guide plate 141 couples to most of area of the upper side 144a of the reflection plate 144, the rim 147 of the reflection plate 144 couples to the third side 141c and the fourth side 141d of the light guide plate 141, when it can be made that a coupling projection 141g of the light guide plate 141 is positioned over the upper side 147b of the rim 147.

That is, the rim 147 may have an inner side 147a, an upper side 147b and an outer side 147c, wherein the inner side 147a couples to the third side 141c and the fourth side 141d, and the upper side 147b couples to the coupling projection 141g. The outer side 147c may be positioned to be in contact with the outer side 147c of an adjacent module.

Thus, of the boundaries between modules, a portion of the transverse direction boundary can also be coupled optically. In other words, the other portion of the transverse direction boundary can also be shielded optically by the rim 147 of the reflection plate 144.

Accordingly, a C portion of the boundary of the modules adjacent to each other can be made to be coupled optically, and by adjusting a height of the rim 147 or a thickness of the coupling projection 141g, the extent of the optical coupling of the modules can be adjusted. Accordingly, the C portion is another light transmitting part enabling optical coupling with the adjacent modules.

Such an adjusted optical coupling at the C portion may also enable to suppress the formation of the relatively bright line or the dark line at the light output surface of the entire back-light unit.

The plurality of back-light unit modules coupled in the transverse and longitudinal directions thus are suitable for using as a back-light unit of a large sized display device.

Since the assembly of the plurality of back-light unit modules is made to be easy according to the described structure, a production cost may be reduced.

Moreover, the fabrication of the back-light unit by using the light guide plate may enable to reduce a thickness of the back-light unit, leading to reduction of a total thickness of the display device.

### <A FIFTH COMPARATIVE EXAMPLE>

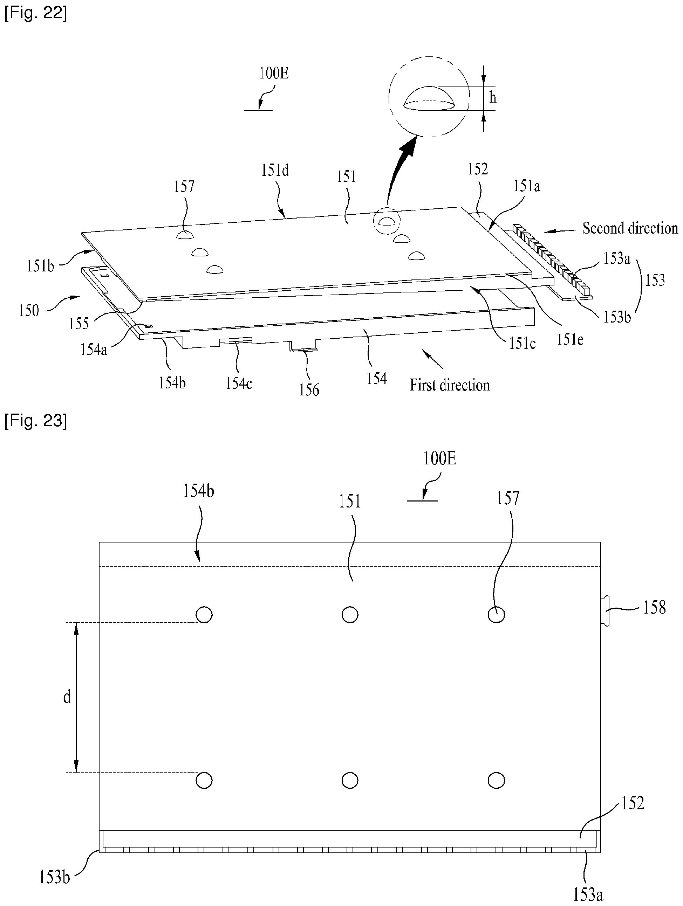

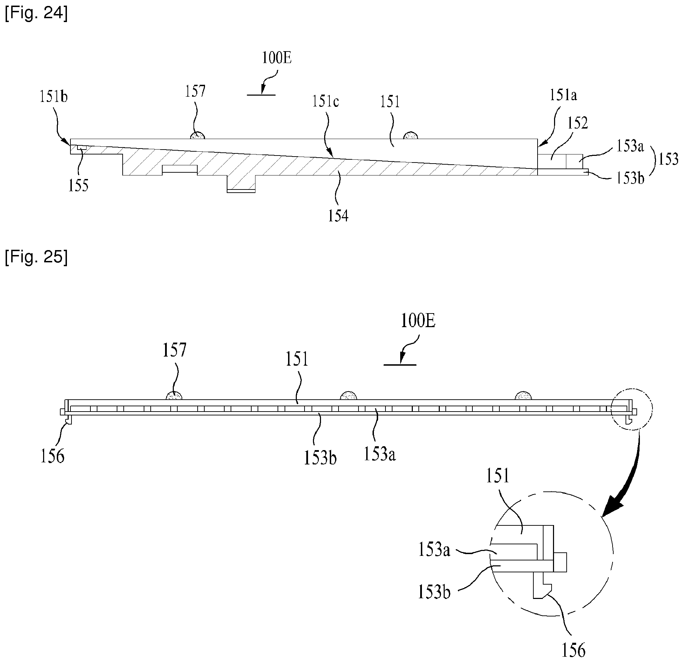

Referring to FIGS. 22 to 27, the back-light unit 100E in accordance with a fifth comparative Example includes a light guide plate 151, a light source 153, a reflection plate 154 and at least one space retaining part 157. The light guide plate 151 and the reflection plate 154 together may be called as a light guide portion 150 or a light guide plate module 150. Unexplained parts may have things identical to the foregoing comparative Examples applied thereto.

The light guide plate 151 has a flat upper side, and sloped underside, and a light light incidence part 152 is projected from a portion of a side.

The light guide plate 151 has opposite first side 151a and a second side 151b, and opposite third side 151c and fourth side 151d.

The light guide plate 151 has a thickness which becomes the thinner as the thickness goes from the first side 151a to the second side 151b the more, forming the underside of the light guide plate 151 to be sloped, may be entirely.

The light light incidence part 152 at the first side 151a of the light guide plate 151 may have a thickness thinner than a thickness of the first side 151a of the light guide plate 151.

According to this, an upper side of the light light incidence part 152 and an upper side of the light guide plate 151 are positioned on planes different from each other.

Depending on cases, in order to transmit the light uniformly throughout the light guide plate 151, a portion of a lower side of the light light incidence part 152 may be formed unevenly.

An upper side of the circuit board 153b of the light source 153 coupled to the underside of the light light incidence part 152 may also be formed unevenly at the same position.

The light guide plate 151 may have at least one fastening protrusion 155 protruding from an underside periphery as a fastening member for coupling to coupling to the upper side of the reflection plate 154, additionally.

The fastening protrusion 155 is placed in a fastening recess 154a in the upper side of the reflection plate 154 for retaining a position even against an external impact or vibration.

The light guide plate 151 has at least one space retaining part 157 on an upper side.

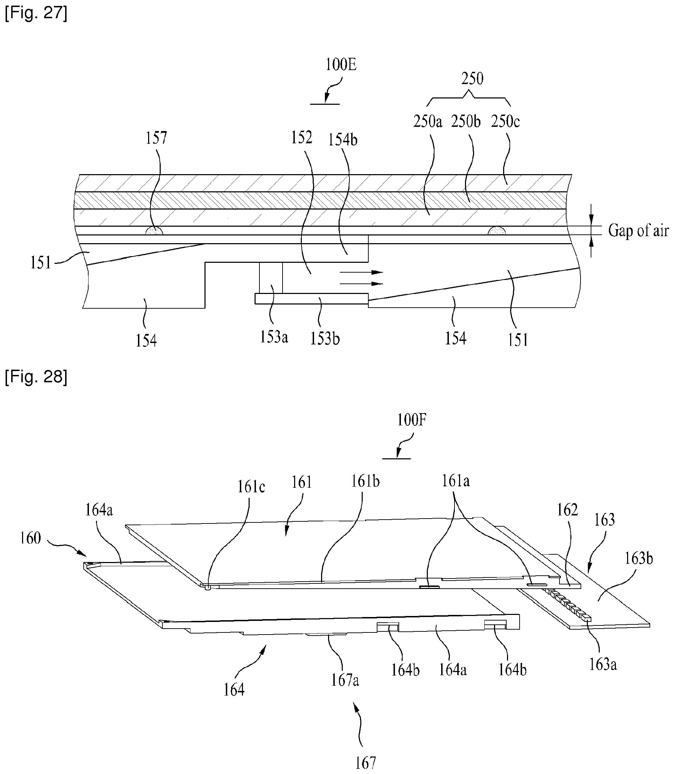

The space retaining part 157 is at least one protrusion, for supporting an optical sheet 250 shown in FIG. 27 to retain a gap of an air layer between the light guide plate 151 and the optical sheet 250.

Of the surfaces of the protrusion 157, a surface in contact with the light guide plate 151 is flat, and a surface in contact with a surface of the optical sheet 250 may be formed to be semi-circular to have a curvature.

It is preferable that a radius of the curvature of the protrusion 157 in contact with the surface of the optical sheet 250 is about 0.1 ∼ 1mm.

This is because a loss of the light due to reflection or refraction at the protrusion 157 may become larger if the radius of the curvature is below about 0.1mm or over about 1mm.

Therefore, it is favorable to fabricate the protrusion 157 by adjusting the curvature of the protrusion 157 appropriately such that the light incident onto the protrusion 157 is not lost, but proceeds in a direction of the optical sheet 250 as much as possible.

Moreover, it is beneficial that the protrusion 157 has a height "h" of about 1 ∼ 2mm, one of which reason is that, if the height "h" of the protrusion 157 is below about 1mm, the gap of the air layer is too small for an incident light to diffuse, making effectiveness of the air layer gap poor, and if the height "h" of the protrusion 157 is over about 2mm, a total thickness of the back-light unit 100E becomes thick, making effectiveness of the back-light unit poor.

It is beneficial that a distance "d" between adjacent protrusions 157 is about 1/3 of a distance from a light input surface (the light light incidence part 152) to a light output surface (a light forwarding surface) of the light guide plate 151.

That is, it is beneficial that the distance "d" between adjacent protrusion 157 is about 2 ∼ 3cm. This is because, if the distance "d" between adjacent protrusion 157 is below about 2mm, a number of the protrusion 157 formed on the surface of the light guide plate 151 increases, causing a light loss coming from reflection and refraction of the incident light, and if the distance "d" between adjacent protrusions 157 is over about 3mm, the optical sheet 250 supported by the protrusion 157 can overhang or sag, causing improper diffusion of the light.

Therefore, it is beneficial that adjacent projections 157 are symmetric in left/right directions with respect to the surface of the light guide plate 151, and formed at an appropriate distance and number.

Depending on cases, it is beneficial that the protrusion 157 is formed of a material that is transparent and has a low surface tension so that the protrusion 157 can be adhered to the light guide plate 151, easily.

For an example, the protrusion 157 may be formed of PMMA (Polymethylmethacrylate), polycarbonate, cyclic olefin copolymer, and so on, or, depending on cases, the same material with the light guide plate 151.

In the meantime, the light source 153 is at a side of the light light incidence part 152 for emitting the light to the light guide plate 151, and may include at least one LED 152a and a circuit board 153b.

The LED 153a, at the side of the light light incidence part 152, generates and emits the light to the light light incidence part 152.

The circuit board 153b supports and couples to undersides of the LED 153a and the light light incidence part 152.

The light light incidence part 152 is projected from the side of the light guide plate 151 for decreasing relatively dark portions between the LEDs 153a, and at least partially preventing the light from the LED 153a from leaking directly through interconnected portions between the back-light units.

The reflection plate 154 couples to an underside of the light guide plate 151 for reflecting the light to the light guide plate 151, and covers the second to fourth sides 151b, 151c and 151d of the light guide plate 151 for adjusting transmission of the light from the light guide plate 151 to an outside of the back-light unit or adjacent modules.

An upper side of the reflection plate 154 has a slope opposite to the slope of the underside of the light guide plate 151.

Accordingly, if the reflection plate 154 is placed on the light guide plate 151 such that the upper side of the reflection plate 154 couples to the underside of the light guide plate 151, the underside of the reflection plate 154 and the upper side of the light guide plate 151 are parallel to each other.

That is, the reflection plate 154 has opposite first and second sides, and has a thickness which becomes the thicker as the thickness goes from the first side to the second side the more.

The light source 153 is positioned at the first side of the reflection plate 154, and a cover projection 154b is formed at the second side of the reflection plate 154.

The cover projection 154b covers an upper side of the light source of an adjacent back-light unit when a plurality of the back-light units are assembled, and may prevent the LED 153a at the light light incidence part 152 of the light guide portion 151 from showing on a display screen.

As a fastening member for coupling to the light guide plate 151, the reflection plate 154 may have at least one fastening recess 154a at an upper side periphery.

As described, the fastening protrusion 155 of the light guide plate 151 is placed in the fastening recess 154a in the reflection plate 154 for maintaining a position even against an external impact or vibration.

Moreover, the reflection plate 154 has opposite third side and fourth side, wherein the third side has a side hook recess 154c as a fastening member for coupling to the back-light unit adjacent thereto at the time a plurality of the back-light units are assembled, and the fourth side has a side hook 158 as a member for coupling to the back-light unit adjacent thereto.

If the back-light units are fabricated as modules and a plurality of the back-light units assembled, the back-light units can be coupled together as the side hook recess 154c in the reflection plate 154 is placed on the side hook of the back-light unit adjacent thereto, and the side hook 158 of the reflection plate 154 is placed in the side hook recess in the back-light unit adjacent thereto.

The side hook 158 and the side hook recess 154c enable easy alignment and assembly of the plurality of the back-light units in a transverse (or longitudinal, as seen from the other side) direction.

As a fastening member for fastening the back cover (not shown) of the back-light unit, the reflection plate 154 has at least one underside hook 156 at an underside periphery for coupling to the back cover (or a frame; not shown).

The underside hook 156 enables easy fastening of the reflection plate 154 to the back cover of the back-light unit without screws like the related art.

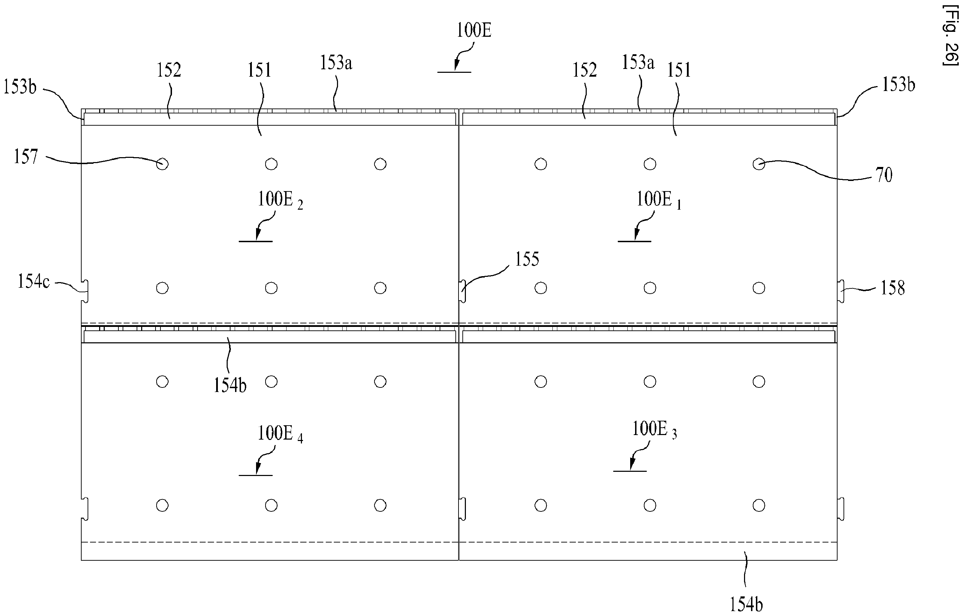

FIG. 26 illustrates a large sized back-light unit having a plurality of the back-light units in FIG. 22 fabricated into modules and assembled together.

Referring to FIG. 26, after fabricating the light guide portion 150 having the light guide plate 151 and the reflection plate 154 under the light guide plate 151 as a module, the side hook 158 of one module may be placed in the side hook recess 154c in the other back-light unit adjacent thereto to couple the one module to the other back-light unit.

By connecting the back-light units on opposite side of the back-light unit, a plurality of the back-light units can be aligned in a transverse direction.

Referring to FIG. 27, in the back-light units arranged in a longitudinal direction, the cover projection 154b of the reflection plate 154 of the back-light unit covers an upper side of the LED 153a of the back-light unit adjacent thereto, for at least partially preventing the LED 153a at the light light incidence part 152 of the light guide plate 151 from showing on a display screen.

Since the back-light unit has an underside hook 156, for fastening to the back cover (not shown) of the back-light unit.

The protrusion 157 on the upper side of the light guide plate 151 supports the optical sheet 250, for retaining a gap of the air layer between the light guide plate 151 and the optical sheet 250.

The air layer diffuses the light from the light guide plate 151 like a related art diffusion plate owing to a difference of refractive indices.

The light diffused at the air layer incidents on the display panel such that the light is distributed throughout display panel uniformly as the light pass through the optical sheet 250, enabling the display panel to obtain a relatively uniform brightness.

As an example, the optical sheet 250 has the diffusion sheet 250a, a prism sheet 250b, and a protective sheet 250c stacked in succession, wherein the diffusion sheet 250a scatters the light from the light guide plate 151 to make a brightness distribution of the light uniform, the prism sheet 250b converges the light to the display panel, and the protective sheet 250c protects the prism sheet 250b.

Thus by forming the gap of the air layer between the light guide plate and optical sheet with the projection of the light guide plate, an optical unevenness taking place at a boundary of adjacent light guide plates can be reduced.

### <A SIXTH COMPARATIVE EXAMPLE>

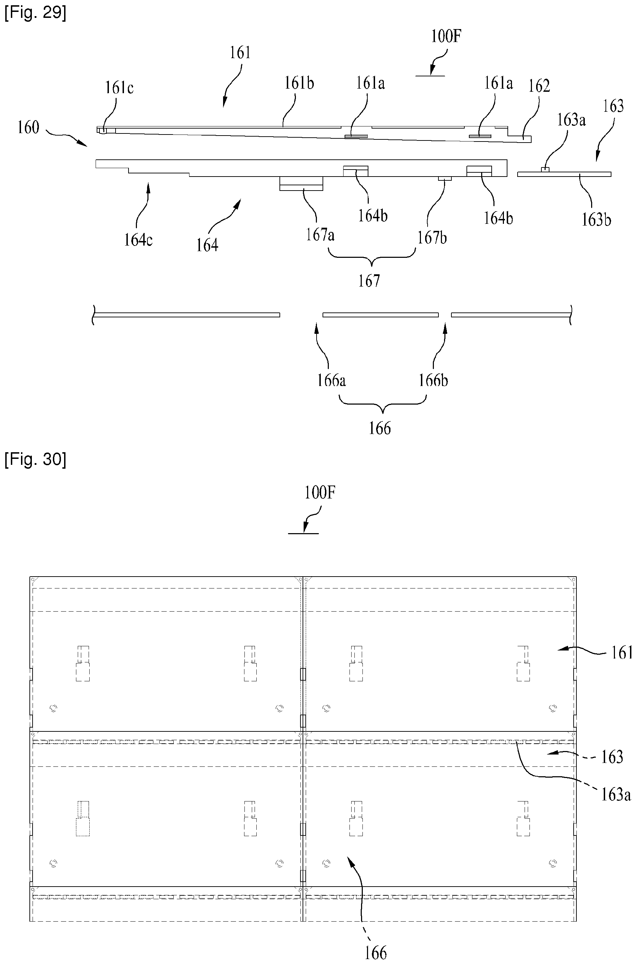

Referring to FIGS. 28 and 29, the back-light unit 100F in accordance with a sixth comparative Example includes a light guide plate 161, a light source 163, a reflection plate 164 and a frame 165. Things applied to the foregoing comparative Examples can be applied to part unexplained herein. The light guide plate 161 and the reflection plate together may be called as a light guide portion or a light guide module 160.

The light guide plate 161 has a flat upper side, a sloped underside, and a light light incidence part 162 at a portion of a side for receiving a light from the light source 163.

The light guide plate 161 has a thickness which becomes the thinner as the thickness goes the farther from the light light incidence part 162, making the underside of the light guide plate 161 sloped on the whole.

The light source 163 includes a circuit board 163b having the LED 163a mounted thereon.

The light light incidence part 162 of the light guide plate 161 may have a thickness thinner than the light guide plate 161 and projected from the light guide plate 161. That is, since the light light incidence part 162 is projected from an effective screen, the light light incidence part 162 can decrease a relatively dark portion caused by a gap between the light sources 163, and prevent the light from leaking direct from the light source 163 through a connection portion between the light guide plates 161.

The reflection plate 164 is coupled to an underside of the light guide plate 161, for an example, by means of a fastening protrusion 161a of the light guide plate 161 to a fastening hole 164b in the reflection plate 164.

In this instance, the reflection plate 164 may have a rim 164a at least a side for the light guide plate 161 to couple to the reflection plate 164, securely.

Referring to FIGS. 28 and 29, the rim 164a is shown angled upward from opposite edges of the reflection plate 164 and extended therefrom, with the light guide plate 161 disposed therebetween.

At least one fastening hole 164b may be formed in the rim 164a, enabling the fastening protrusion 161a on the light guide plate 161 to be fastened to the fastening hole 164b more securely.

The light guide plate 161 may have projection 161b along opposite edges of the light guide plate 161 in contact with edges of the rim 164a for positioning the light guide plate 161 with respect to the reflection plate 164.

Since the projection 161b is positioned over the edge of the rim 164a and connected to the projection 161b on an adjacent light guide plate 161, the rim 164a can prevent the light from being discontinued and adjust an extent of light coupling to an adjacent light guide portion 160.

In a case the back-light units 100F in accordance with the sixth comparative Example having the light guide plate 161 and the reflection plate 164 are connected side by side, it can be made that the rim 164a is invisible if seen from a light output side.

The rim 164a may also include a function of the reflection plate 164, to cover at least a portion (a portion excluding the projection 161b) of a side of the light guide plate 161, such that, when the back-light units in accordance with the sixth comparative Example adjacent to each other are coupled together as modules, the transmission of the light to an adjacent back-light unit is adjusted, enabling to adjust a relatively bright line or a dark line formed at a boundary of the modules.

Since the light light incidence part 162 and the edge opposite thereto of the light guide plate 161 are not covered with the rim 164a, possible formation of relatively bright/dark line at the boundary of the light guide plates 161 and relatively dark portion at the light light incidence part 162 caused by the step of the light light incidence part 162 can be reduced, thereby improving uniformity of the light from a plurality of the light guide plates 161 significantly.

In the meantime, by providing a connection part 161c at the other edge of the light light incidence part 162 of the light guide plate 161 for fastening to the reflection plate 164 additionally, the light guide plate 161 can be coupled to the reflection plate 164 more rigidly.

When the light guide plate 161 is coupled to the reflection plate 164 together, the edge 164c of the reflection plate 164 on an opposite side of the light light incidence part 162 has a step such that the edge 164c is positioned over adjacent light light incidence part 162, for an example, as shown in FIG. 29.

If the edge 164c of the reflection plate 164 is positioned over the adjacent light light incidence part 162 thus, direct emission of the light from the LED 163a at the light source 163 to an outside of the back-light unit can be prevented.

That is, by placing the LED 163a at a side of the light guide plate 161 and the reflection plate 164 formed in a small size, an adequate light quantity can be secured, heat from the LED 163a can be dispersed, and, especially, the LED 163a at the side of the light guide plate 161 and the reflection plate 164 can be hidden, optically.

Referring to FIG. 30, since a large sized back-light unit can be fabricated by coupling the light guide plate 161 and the reflection plate 164 adjacent to each other, it is beneficial to maintain a relative position of the light guide plate 161 and the reflection plate 164 constant.

That is, when a plurality of the back-light units 100F each having the light guide plate 161 and the reflection plate 164 in accordance with the sixth preferred embodiment of the present invention are coupled together, size variation of the light guide plate 161 and the reflection plate 164 of the back-light unit can be kept small.

Thus, when the plurality of the back-light units 100F in accordance with the sixth comparative Example are coupled together to form the large sized back-light unit, the back-light unit 100F includes a light guide portion connection part 167 for coupling the light guide portion 160 having the light guide plate 161 and the reflection plate 164 to a frame 165.

The light guide portion connection part 167 is fastened to a frame connection part 166 at the frame 165.

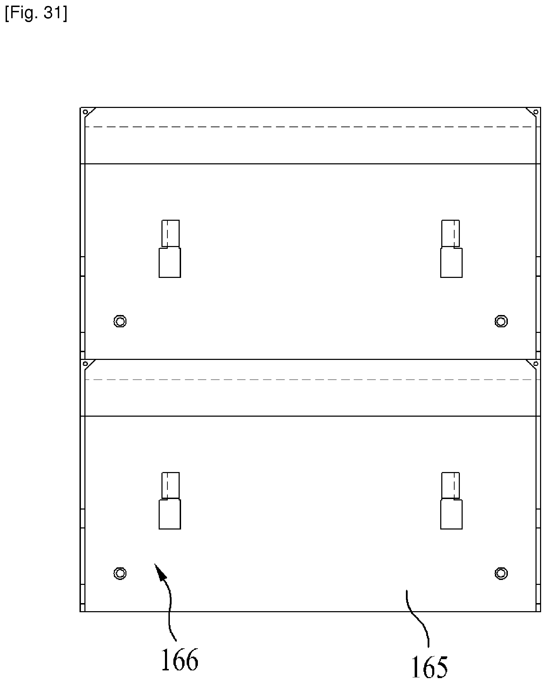

In this instance, referring to FIGS. 31 to 33, the light guide portion connection part 167 can be slidably fastened to the frame connection part 166.

That is, the light guide portion connection part 167 has a projection 167a, and the frame connection part 166 has a sliding slot 166a for placing the projection 167a therein and sliding the projection 167a thereon until the projection is fastened.

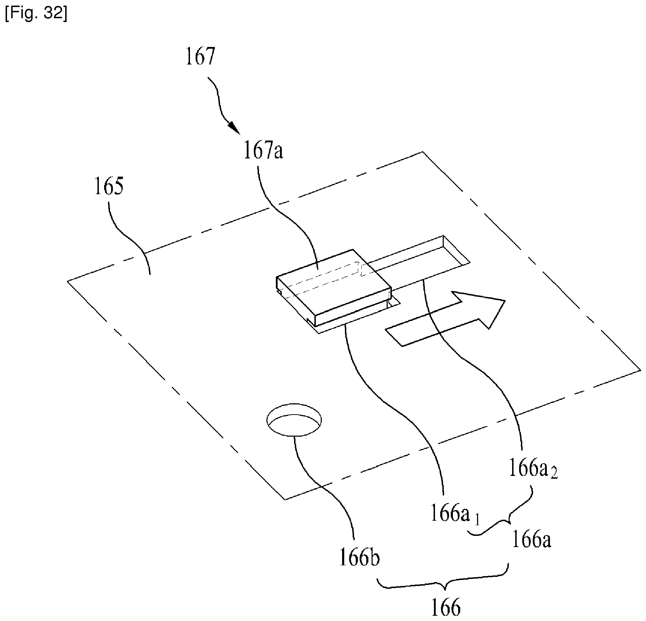

Referring to FIG. 32, the sliding slot 166a has a first slot 166a₁ for placing the projection 167a therein, and a second slot 166a₂ extended from and narrower than the first slot 166a₁.

Accordingly, by fastening the light guide portion connection part 167 to the frame connection part 166, the light guide plate 161 and the reflection plate 164 can be coupled to the frame 165, easily.

That is, without additional screw fastening, the light guide plate 161 and the reflection plate 164 can be coupled to the frame 165, a fastening direction (an arrow direction in FIG. 32) of the slidable fastening can be in any direction of upper/lower, left/right directions.

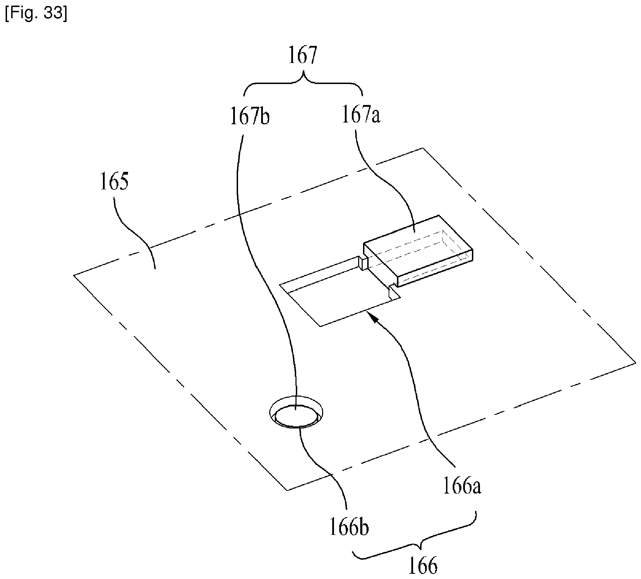

Moreover, referring to FIG. 33, the light guide portion connection part 167 may have a supplementary (or auxiliary) protrusion 167b additionally and the frame connection part 166 may have an inserting hole (opening) 166b additionally for inserting the supplementary protrusion 167b therein.

By making the supplementary protrusion 167b and the inserting hole 166b to be fastened together at a position the protrusion 167a and the sliding slot 166a are fastened together, after the light guide plate 161 and the reflection plate 164 are slidably coupled to the frame 165, the coupling state can be kept rigidly.

In the meantime, as shown, it may be favorable that the light guide portion connection part 167 is positioned at the reflection plate 164.

Thus, the light guide plate 161 and the reflection plate 164 coupled adjacent to each other can be coupled in a transverse direction or a longitudinal direction, and by connecting the light guide plate 161 and the reflection plate 164 and the light source 163, a back-light unit for a large sized display device can be fabricated.

Moreover, by connecting the light guide plate 161 and the reflection plate 164 in a tiling fashion, reliability of the large sized back-light unit can be improved, and local dimming in which the light source 163 is driven partially according to an image can be applicable, enabling to produce an image of a high contrast ratio.

### <A FIRST EMBODIMENT>

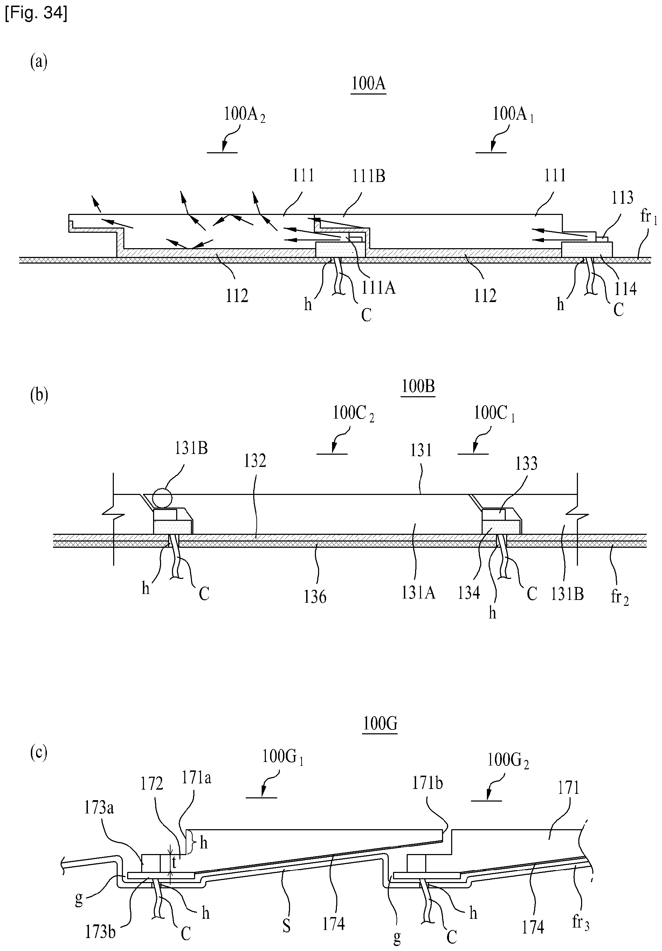

FIG. 34 is various embodiments of the LED backlight unit according to the present invention. Specifically, FIG. 34A and 34B are application examples based on the LED backlight unit shown in FIGS. 3 and 13, respectively. Because of that, the repeated description related to FIGS. 3 and 13 will be omitted.

Generally, LCD type displays includes a frame under the LED backlight unit and a driving unit (not shown) having various driving circuits or power circuit arranged on a backside of the frame.

Moreover, an auxiliary reflection plate may be provided between the frame (fr) and the light guide plate or the reflection plate may be not provided if the frame is coated with reflective material.

According to the reflection plates 112, 132, and 174, a single reflection plate may be provided corresponding to a single light guide plate or at least two light guide plates may be arranged corresponding to a single reflection plate. In case of FIG. 34B, a plurality of light guide plates may be arranged on the reflection plate 132.

The driving unit may be mounted to the backside of the frame to drive or control the LED backlight unit or liquid crystal panel.

As a result, the LCD includes a liquid crystal panel; an optical sheet provided under the LCD panel; a LED backlight unit having X (X > =1) circuit boards, a light source having a plurality of LEDs provided on the circuit board K(K=1, 2, 3,N), light guide plates having a first side surface having receiving light emitted from the LED of the light source thereon and a second side surface facing the first side surface and P (N > P > =1) reflection plates provided under the light guide plates, at least one reflection plate having plural light guide plates thereon; a frame provided under the backlight unit; at least one driving unit provided in a backside of the frame; a front cover covering a front surface of the LCD panel; and a rear cover covering a rear surface of the LED backlight unit. The circuit boar of the light source or the plural LEDs mounted on the circuit board may be dividedly operable and a plurality of connection holes may be spaced apart a predetermined distance from each other in the frame to connect the circuit board of the light source to the driving unit.

As mentioned above, the LED backlight unit includes the X (X > =1) circuit boards 143, the light source having the plural LEDs arranged on the circuit boards 134, the K(K=1, 2, 3,N) light guide plates 131 having the first side surface receiving light emitted from the LEDs 133 of the light source incident thereon and the second side surface facing the first side surface, and the P(N > P > =1) reflection plates provided under the light guide plates 131. At least one reflection plate may have plural light guide plates arranged thereon.

That is, the number (N) of the light guide plates 131 is smaller than the number (P) of the reflection plates 132. Because of that, plural light guide plates may be arranged on at least one reflection plate.

FIGS. 34A and 34B show that a lower surface defined by the reflection plate and the circuit board maintains plane. As a result, the frame (fr1 and fr2) provided under the reflection plate may be plane frame.

However, according to the embodiment shown in FIG. 34A, the LED backlight unit 100G and the light guide plates 171 have following characteristics.

As shown in FIG. 34A, the light guide plate 171 is provided under the LCD panel and the light incidence part 172 having the light emitted from the LEDs 173a directly mounted to the circuit board 173b, without any auxiliary mounting members, incident thereon may include a projected first side surface 171a and a second side surface 171b facing the first side surface 171. An end of light guide plate toward the second side surface 171b is adjacent to the first side surface 171a of another neighboring light guide plate 171. The second side surface 171b is thicker than the first side surface 171a and each of the light guide plates has the thickness gradually changed from the first side surface 171a toward the second side surface 171b.

Moreover, the light guide plate 171 is divided into an light incidence part and an light emission part, the light guide plate 171 may be divided into an light incidence part 172 having an incident surface receiving light emitted from the LEDs 173a and an light emission part, the other portion(light emission part) of the light guide plate except the light incidence part, to emit the incident light upward.

The circuit board 173b includes the plurality of LEDs arranged on the circuit board 173b to emit the light with an orientation angle with respect to a predetermined first direction. Here, the predetermined first direction is referenced to as a direction along which the light emitted from the LEDs 172a is emitting, specifically, a direction from the first side surface 171a toward the second side surface 171b.

That is, the light emitted from the LEDs 173a is emitted toward the first direction, that is, toward the incident surface of the light incidence part. That is, it is preferable that the direction of the light emitted from the LEDs 173a is limited toward the incident surface of the light incidence part.

The incident surface of the light incidence part 172 is referenced to as a side surface of the light incidence part 172 facing the surface receiving light emitted from the LEDs 173a.

As a result, an upper surface of the light emission part is a light output surface and the reflection plate may be provided under a lower surface of the light emission part. Then, the light guide plate 171 may include a step formed by the height difference between the upper surface of the light incidence part 172 and the upper surface of the light emission part.

As shown in FIG. 34C, the thickness (t) of the light incidence part 172 may be equal to or less than the height (h) of the step and the thickness (t) of the step is equal to or more than the thickness of the end portion of the light emission part toward the second side surface.

The thickness of the LED 173a may be equal to or less than the thickness of the light incidence part 172. Because of the above configuration, most of the lights emitted from the LEDs 173a may be incident on the incident surface of the light incidence part.

That is, the plural light guide plates 171 may have the light output surfaces to form an identical plane surface. The light guide plates may secure a spaced distance from each other, not in contact, to reduce thermal deformation. FIG. 34A shows the reflection plate is provided between the light guide plates 111 and FIG. 34B shows the light guide plates 131 are spaced apart from each other physically. FIG. 34C shows the light guide plates are spaced apart a predetermined distance from each other, with the reflection plate provided there between.

The light incidence part 172 having the light incident thereon may be projected from a lower portion of the first side surface 171a of each light guide plate. The LEDs 173a mounted on the circuit board horizontally arranged under the light incidence part 172 may be adjacent to the side portion of the light incidence part 172.

Also, the height of the LEDS 173a may be corresponding to the height of the light incidence part 172 and the other portion of the first side surface 171a except the light incidence part 172 may be substantially perpendicular to the side portion of the light incidence part 172.

The thickness of the light incidence part 172 may be equal to less than a half of the thickness of the first side surface 171a.

The light guide plate 171 may include the step formed by the height difference between the upper surface of the light incidence part 172 and the upper surface of the light emission part.

The LEDs 173a are mounted on the circuit board having a predetermined portion extended toward a under portion of the light incidence part 172 and thus the circuit board may be arranged under the light incidence part 172. The light guide plate has the thickness decreased toward the second side surface 171b from the first side surface 171a and the upper light output surface of the light guide plate is horizontal. Because of the thickness change of the light guide plate and the thickness of the circuit board, a back surface of the LED backlight unit has a shape with projections and recesses formed continuously at a predetermined interval.

In FIGS. 34C, The frame may have a shape corresponding to the shape of the lower surface of both the light guide plate and the circuit board, different from the frame shown in FIGS. 34A and 34B.

As a result, according to the embodiment shown in FIG. 34C, the frame provided under the LED backlight unit 100G may include a plurality of recesses (g) corresponding to the projections of the light incidence part 172 and the circuit board.

The LCD having the above light guide plates may include a plurality of modules 100G1 and 100G2 including the circuit board 173b, the plurality of LEDs 173a arranged on the circuit board 173b for emitting light with an orientation angel with respect to a predetermined direction and a plurality of light guide plates including the light incidence part 172 having the incident surface receiving light emitted from the LEDs 173a and the light emission part emitting light upward. The modules 100G1 and 100G2 are mounted on the frame fr3 simultaneously to compose a single LED backlight unit 100G.

According to the embodiment shown in FIG. 34C, the plural modules includes a first module 100G1 and a second module 100G2 adjacent to the first module 100G1. the first module 100G1 includes the first module comprises a first circuit board; a plurality of LED light sources arranged on the first circuit board for emitting light, with an orientation angle with respect to a predetermined direction; and a first light guide plate comprising an light incidence part including an incident surface having the light incident thereon from the LED light source and an light emission part emitting the incident light upward, and the second module comprises a second circuit board; a plurality of LED light sources arranged on the second circuit board for emitting light, with an orientation angle with respect to a predetermined direction; and a second light guide plate comprising an light incidence part including an incident surface having the light incident thereon from the LED light source and an light emission part emitting the incident light upward, and a predetermined portion of the light emission part of the light guide plate of the first module covers an upper portion of the light guide plate of the second module. That is, a predetermined portion of each light incidence part having the light incident thereon from the LEDS has an overlapped portion with the end of the neighboring light guide plate toward the second side surface. According to the embodiment shown in FIG. 34C, the end portion of the light guide plate toward the portion with the decreased thickness is extended to the light incidence part and the LEDs of the second module 100G2 to close them.

Also, the reflection plate 172 may be provided under the liquid guide plate 171 and it may shut off the light emitted toward an extended direction of the LEDs.

Here, the light emission part of the first module light guide plate may be spaced apart a predetermined distance from the light emission part of the second module 100G2 to minimize thermal deformation of the light guide plate and the like.

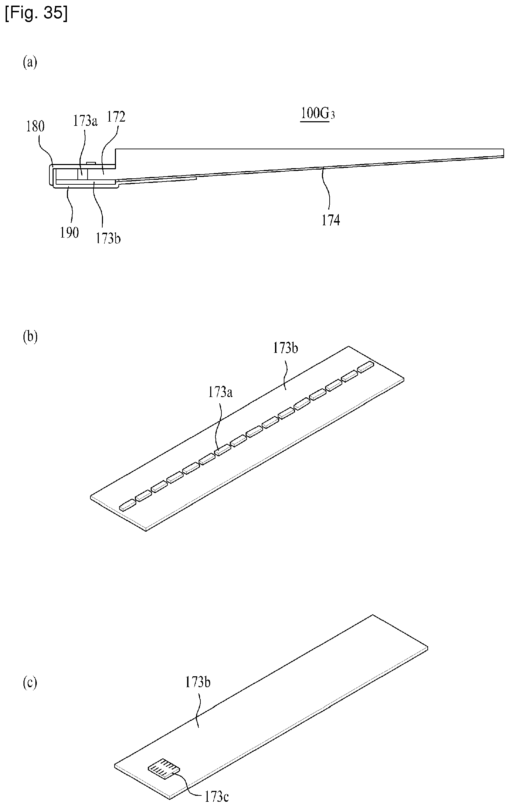

FIG. 35 is a sectional view illustrating an LED backlight module composing the LED unit according to another embodiment and a circuit board composing the backlight module.

Specifically, FIG. 35A is a sectional view illustrating another embodiment of the LED backlight module and FIGS. 35B and 35C are perspective views illustrating an upper surface and lower surface of a circuit board composing the light source, respectively.

The LED backlight module 100G3 shown in FIG. 35A has the thickness of the light guide plate decreased from the first side surface 171a toward the second side surface 171b, like the LED backlight unit 100G1 of the LED backlight unit 100G shown in FIG. 34C, and it includes the light incidence part 172 provided in the lower end of the first side surface 171a to have the light incident thereon. The LEDs 173a of the light source has the structure making the light side-incident on the light incidence part 172 and the circuit board having the LEDs arranged thereon may be provided horizontally under the light incidence part 172.

The light source has the LEDs 173a arranged on the side of the light incidence part 172 and the circuit board is provided under the light incidence part 172. Since the light guide plate has the thickness decreased gradually, the installation of the light guide plate and the light source in the frame may be simple and the light guide plate and the light source may be modulated by the medium of an auxiliary middle mold 180 and the lower cover 190.

The middle mold 180 supports the LEDs 173a of the light source and the upper surface of the light incidence part 172 and the lower cover 190 supports predetermined portions of the circuit board and the reflection plate provided under the light incidence part 172.

The lower cover 190 is recessed to accommodate the projected portion by the circuit board and the projected portion of the lower surface of the lower cover is seated on the recess (g) of the frame mentioned above.

The width of the recess is large than the width of the circuit board and the length of the recess (g) is predetermined enough to receive the plural circuit boards simultaneously.

Also, in case the plural circuit boards are seated in a single recess, the circuit boards composing the each of the LED backlight module or the modules including the circuit board may be arranged continuously for both opposite ends of them to be adjacent to next opposite ends of neighboring ones.

That is, if the LED backlight module may not include the middle mold 180 or the lower cover 190, the circuit board may be directly seated in the recess (g) of the frame and if the middle mold 180 and the lower cover 190 are used, the projected portion of the lower cover 190 may be seated in the recess (g) of the circuit board.

As shown in FIG. 35B, the LEDs 173a, are arranged on the circuit board, spaced apart a predetermined distance from each other. The LEDs 173a are mounted on the circuit board in a state of being spaced apart along a longitudinal direction of the circuit board. The LEDs 173a is controlled or driven by the driving unit including the driving circuit or power circuit mounted on a backside of the frame.

As a result, a cable or FPCB is usable to connect the light source to the driving unit. A connection terminal 173c may be provided opposite to the lower surface of the circuit shown in FIG. 35C.

Here, the connection terminal 173c is provided in the upper surface of the circuit board and the driving unit is provided in the frame backside to drive the light source. Thus, the connection terminal 173c is provided in the lower surface of the circuit board and it connects the circuit board to the driving unit via the connection hole (h) of the frame which will be described in detail.

As a result, the connection terminal is positioned corresponding to the connection hole formed in the frame.

The plural circuit boards having the LEDs 173a mounted thereon are provided, it is difficult to connect the circuit board to the driving circuit through detouring between the light guide plates, without the connection hole (h) connecting the circuit boards 114 and the driving circuit.

The LCD according to the present invention further includes a cable to connect the circuit board composing each module to the driving unit via the connection hole electrically.

As a result, if the connection terminal 173c is provided in the backside of the circuit board, the through hole (not show) corresponding to the connection terminal 173c may be formed in the lower cover 190.

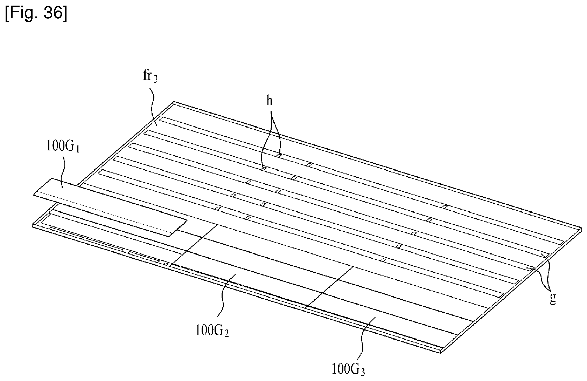

FIG. 36 illustrates the LED backlight unit 100G or LED backlight module 100G3 to the frame of the LCD.

The LED backlight unit 100G or each LED backlight module composing or LED backlight unit is mounted to the frame. For convenience sake, the LED backlight unit 100G or LED backlight modules may be mounted according to FIGS. 34C or FIG. 34A.

The frame includes a plurality of long recesses (g) at a predetermined interval. The recesses (g) will receive the projected portion of the circuit board or the lower cover 190.

Because of that, the position of the circuit board may be corresponding to the position of the recess (g). A single recess (g) may be corresponding to plural LED backlight modules. As shown in FIG. 36, a single recess (g) has a predetermined length corresponding to the overall width of the frame and a predetermined number of the LED backlight modules corresponding to the overall width of the frame are securely seated to the single recess.

As shown in FIG. 34, the plural connection holes (h) are formed in the frame and they are used as connection passage to connect the circuit boards of the light source to the driving unit provided in the backside of the frame.

If the recess (g) is formed in the frame by the structure of projecting the circuit board under the LED backlight unit 100G, the connection hole (h) may be formed in the recess (g). If the connection hole (h) is formed in the recess (g), the connection terminal 173c provided in the lower surface of the circuit board may be connected to the driving unit via the connection hole (h).

The connection terminal 173c of the circuit board 173b of the light source is positioned, such that the position of the circuit board 173b corresponds to the connection hole (h) of the frame (fr3). That is, the connection terminal 173c is exposed through the connection hole (h) from the backside of the frame such that the connection terminal 173c of the circuit board is connected to the driving unit formed in the backside of the frame smoothly. Then, the connection terminal 173c of the circuit board is connected to the driving unit of the frame via the cable.

A predetermined number of the connection holes (h) may corresponding to each circuit board of the light sources be provided or plural circuit boards may be connected to the driving unit via a single connection hole (h).

As shown in FIG. 36, the LED backlight module is not limited to being horizontally installed and it may be vertically installed. In the latter case, the direction of the recess (g) may be vertical also.

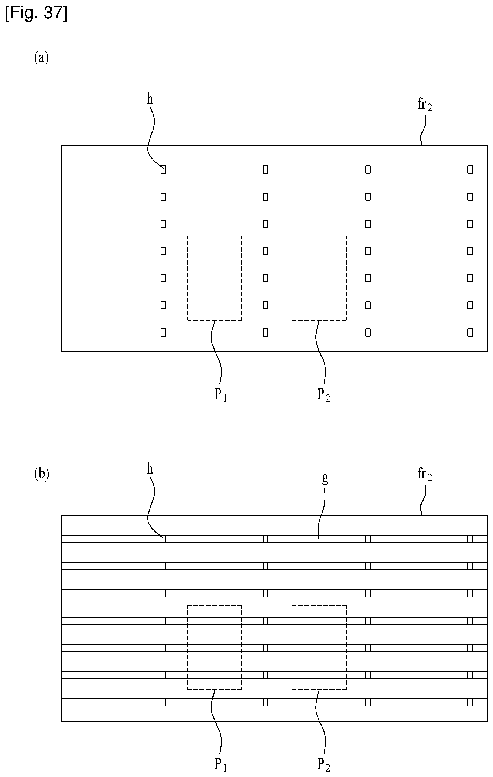

FIG. 37 is a plane view illustrating the frame of the LCD. FIG. 37A illustrates a frame having only a plurality of connection holes (h) without the recess (g) receiving the circuit board and FIG. 37B illustrating a frame having a plurality of recesses (g) formed corresponding to a lower surface shape of the LED backlight unit 100G to receive the circuit board and the light and connection holes formed in the recesses (g), respectively.

A plurality of driving units are mounted to a backside of the frame shown in FIG. 37. As shown in FIG. 37, the recesses (g) are formed at a predetermined interval and they can receive the plural LED backlight modules of each LED backlight unit 100G simultaneously. The recesses (g) formed in the frame may have a formation direction determined according to the installation direction of the LED backlight modules.

Because of the above method for forming the recess (g) in the frame, the positions of the LED backlight modules composing the LED backlight unit 100G may be determined efficiently and detachment caused by external shock applied to the fabricated product may be prevented.

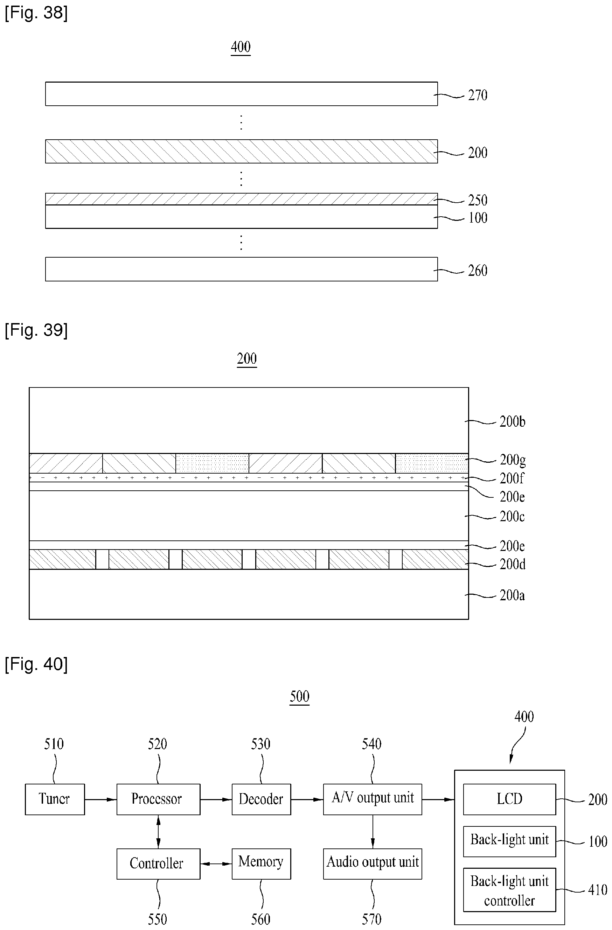

Referring to FIGS. 38 and 39, a liquid crystal display device 400 can be fabricated by using the back-light unit in accordance with one of the first to sixth comparative Example and the first embodiment of the present invention (reference numerals 100A to 100G, hereinafter represented with a reference numeral 100) described before and the liquid crystal display panel 200.

Referring to FIG. 38, the liquid crystal display panel 200 on the back-light unit 100 of the present invention includes an upper substrate 200a, a lower substrate 200b and a liquid crystal layer 200c injected between the upper substrate 200a and the lower substrate 200b.

On one side of the liquid crystal display panel 200, there is a driver (not shown) for driving the liquid crystal display panel.

Referring to FIG. 38, there are a lower cover 260 which covers the back-light unit 100 under the back-light unit 100, and an upper cover 270 which covers a front of the liquid crystal display panel 200 on the liquid crystal display panel 200.

The liquid crystal display panel 200 includes a matrix of liquid crystal cells, for forming an image by controlling light transmission ratios of the liquid crystal cells according to information on an image signal from the driver.

The driver may include a flexible printed circuit board FPC, a driver chip mounted to the FPC, and a printed circuit board PCB connected to the other side of the FPC.

In the meantime, referring to FIG. 38, the back-light unit 100 may be position in rear of the liquid crystal display panel 200, and a plurality of optical sheets 250 may be provided on the back-light unit 100.

The optical sheets (Also, refer to Fig 27.) are on a back side of the liquid crystal display panel 200, and may include a diffusion sheet 250a, a prism sheet 250b, and a protective sheet 250c.

The diffusion sheet 250a diffuses the light from the back-light unit 100 and supplies the light to the liquid crystal display panel 200.

The prism sheet 250b has an array of triangular prisms on an upper side, for covering the light diffused at the diffusion sheet in a direction perpendicular to a plane of the liquid crystal display panel 200 position over the prism sheet 250b.

The micro-prism on the prism sheet 250b has a predefined angle. Most of the light passed through the prism sheet 250b proceeds perpendicular to the prism sheet 250b to provide a uniform luminance distribution.

The protective sheet 250c at the uppermost side protects the prism sheet 250b which is susceptible to scratch.

Referring to FIG. 39, formed on the lower substrate 200a of the liquid crystal display panel 200, there are a matrix of gate lines and data lines, and a pixel electrode and a thin film transistor TFT 200d at every cross point of the gate lines and the data lines.

A signal voltage applied to the liquid crystal display panel 200 through the thin film transistor 200d is supplied to the liquid crystal layer 200c by the pixel electrode, and the liquid crystal layer 200c is aligned according to the signal voltage to fix a light transmission ratio.

Formed on the upper substrate 200b, there are a color filter 200g having R, G, B pixels for producing a predefined color as the light passes therethrough, and a common electrode 200f of a transparent conductive material, such as ITO (Indium Tin Oxide) or IZO (Indium Zinc Oxide).

Alignment films may be positioned on upper/lower sides of the liquid crystal layer 200c.

The liquid crystal display device can maximize a performance by using the back-light unit in accordance with one of the first to sixth comparative Examples of the present invention.

### <A SECOND EMBODIMENT>

FIG. 40 illustrates a block diagram of a liquid crystal TV set having a liquid crystal display device in accordance with a second preferred embodiment of the present invention applied thereto.

The liquid crystal TV set has a system as shown in FIG. 36, for transmission and display of a broadcasting data stream from a tuner 510 to the liquid crystal display device 400 through a processor 520, a decoder 530, and an A/V output unit 540.

The tuner 510 or the processor 520 is controlled by a control unit 550, and the controller 550 may include a memory 560 additionally.

If a user selects and set a broadcasting channel by operating the liquid crystal TV set 500, the controller 550 controls the tuner 510 and the processor 520, to select a broadcasting channel the user set thus, and the processor 520 splits the data stream of a broadcasting program provided through the broadcasting channel into an audio and video data, and forwards the audio and video data split thus.

Then, the decoder 530 decodes the data the processor 520 into audio and video signals, for forwarding the audio and video signals to the liquid crystal display device 400 or an audio output unit 570 such as a speaker unit through the A/V output unit 540.

In this instance, the back-light unit 100 is driven by a back-light unit controller 410, for illuminating an image forwarded to the liquid crystal display panel 200.

In the meantime, the processor 520 may receive the broadcasting data stream through the Internet.

Thus, the back-light unit 100, the liquid crystal display device 400 with the back-light unit 100 and the liquid crystal TV set 500 with the liquid crystal display device 400 of the present invention have been described in detail.

In the back-light unit 100 of the present invention, an upper side width of the light light incidence part is formed smaller than a lower side width of the light light incidence part, shifting a light path of the light reflected totally, to increase a light quantity of the light forwarded upward from the light guide plate.

The arrangement of the LEDs at a side of the light guide plate permits to reduce a total thickness of the back-light unit, thereby enabling to reduce a display panel, such as the LCD.

Fabricating the back-light unit having the light guide plate and the LEDs coupled thereto as a module, and assembling a plurality of the modules by connecting the modules in a tiling fashion permits to provide a back-light unit suitable for a large sized display device.

The fastening hook and fastening member on the reflection plate of the back-light unit fabricated as the module permits easy and simple assembly, not only with an adjacent back-light unit, but also with a back cover of the back-light unit.

The projection on the light guide plate to form an air layer gap between the light guide plate and the optical sheet reduces an optical unevenness taking place at a boundary of adjacent light guide plates.

The formation of fastening members at the light guide plate modules permits easy and simple assembly with an adjacent module, as well as with the frame.

The applicability of the local dimming in which the light source is driven partially according to an image permits to produce an image of a high contrast ratio.

A portion of the boundary of the adjacent modules can be made to be coupled optically, and an extent of the optical coupling of the modules can be adjusted. By adjusting or regulating the extent of the optical coupling, a relatively bright line or a dark line on light forwarding surface or on an interconnected part between adjacent modules can be prevented or reduced.

## Claims

1. A liquid crystal display (LCD) comprising:
a plurality of modules (100), each module (100) comprising a circuit board (114, 134, 173b), a plurality of light emitting diode (LED) light sources (113, 133, 173a) arranged on the circuit board for emitting light, with an orientation angle with respect to a predetermined direction, and a light guide plate (111, 131, 171) comprising a light incidence part (111A, 172) including an incident surface receiving light emitted from the LED light source and a light emission part emitting the light upward, respectively;
a frame (136,fr1,fr2,fr3) having a front surface having the plurality of the modules (100) arranged thereon;
**characterized in that** the liquid crystal display further comprises:
at least one driving unit (410) arranged on a rear surface of the frame,
wherein a connection hole (h) is formed in the frame to connect the circuit board of respective module (100) to the driving unit (410);
wherein a cable (C) connects the circuit board of respective module (100) to the driving unit (410) via the connection hole (h); and
wherein a connection terminal (173c) to be connected with the cable (C) is provided on the circuit board and the connection terminal (173c) is positioned, such that it corresponds to the connection hole (h) formed in the frame (fr3).

2. The LCD of claim 1, wherein the plurality of the modules (100) comprises a first module and a second module arranged adjacent to each other and the first module comprises a first circuit board; a plurality of LED light sources (113, 133, 173a) arranged on the first circuit board emitting light, with an orientation angle with respect to a predetermined direction; and a first light guide plate comprising a light incidence part including an incident surface receiving light emitted from the LED light source and a light emission part emitting the light upward, and the second module comprises a second circuit board; a plurality of LED light sources (113, 133, 173a) arranged on the second circuit board emitting light, with an orientation angle with respect to a predetermined direction; and a second light guide plate comprising a light incidence part including an incident surface receiving light emitted from the LED light source and a light emission part emitting the light upward, and wherein a predetermined portion of the light emission part of the light guide plate of the first module covers an upper surface of the light incidence part of light guide plate of the second module.

3. The LCD of claim 1 or 2, wherein the connection terminal is provided on an opposite side of the circuit board having the LED light sources (113, 133, 173a) arranged thereon.

4. The LCD of any one of previous claims, wherein the light guide plate comprises a step formed by height difference between the upper surface of the light incidence part and the upper surface of the light emission part.

5. The LCD of claim 4, wherein the thickness of the light incidence part is identical to or less than the thickness of the step.

6. The LCD of claim 4, wherein the thickness of the step is identical to or more than the thickness of end portion of the light emission part.

7. The LCD of claim 1, wherein the thickness of the light source is identical to or less than the thickness of the light incidence part.

8. The LCD of claim 1, wherein a plurality of recess parts for seating the circuit board therein are formed in the frame.

9. The LCD of claim 8, wherein the connection holes (h) formed in the frame are formed in the recess part.

10. The LCD of claim 8, wherein the recess part has the length larger than the width and the plurality of the recess parts are formed in parallel at a predetermined interval.

11. The LCD of claim 10, wherein the plurality of the circuit boards are seated in one recess part in a longitudinal direction.

12. The LCD of claim 8, wherein the circuit boards seated in one recess part are continuously arranged, such that both ends of neighboring two circuit boards are adjacent thereto.

13. The LCD of claim 8, wherein the LED light source is arranged adjacent to a side of the light incidence part of the light guide plate and the LED light source is directly mounted on the circuit board arranged horizontally.

## Patentansprüche

1. Flüssigkristallanzeige (LCD), umfassend:
mehrere Module (100), wobei jedes Modul (100) eine Leiterplatte (114, 134, 173b), mehrere Leuchtdioden-(LED)-Lichtquellen (113, 133, 173a), die zum Abgeben von Licht mit einem Lagewinkel mit Bezug auf eine vorbestimmte Richtung auf der Leiterplatte angeordnet sind, und eine Lichtleiterplatte (111, 131, 171) umfasst, die ein Lichteinfallteil (111A, 172), umfassend eine Einfalloberfläche, die von der LED-Lichtquelle abgegebenes Licht empfängt, bzw. ein Lichtemissionsteil, das das Licht nach oben abgibt, umfasst;
einen Rahmen (136, fr1, fr2, fr3), der eine Vorderseite mit den darauf angeordneten Modulen (100) aufweist;
**dadurch gekennzeichnet, dass** die Flüssigkristallanzeige ferner umfasst:
mindestens eine Antriebseinheit (410), die auf einer Rückseite des Rahmens angeordnet ist,
wobei ein Verbindungsloch (h) in dem Rahmen gebildet ist, um die Leiterplatte des jeweiligen Moduls (100) mit der Antriebseinheit (410) zu verbinden;
wobei ein Kabel (C) die Leiterplatte des jeweiligen Moduls (100) mit der Antriebseinheit (410) über das Verbindungsloch (h) verbindet; und
wobei eine mit dem Kabel (C) zu verbindende Anschlussklemme (173c) auf der Leiterplatte bereitgestellt ist, und die Anschlussklemme (173c) derart positioniert ist, dass sie dem in dem Rahmen (fr3) gebildeten Verbindungsloch (h) entspricht.

2. LCD nach Anspruch 1, wobei die mehreren Module (100) ein erstes Modul und ein zweites Modul umfassen, die nebeneinander angeordnet sind, und das erste Modul eine erste Leiterplatte, mehrere LED-Lichtquellen (113, 133, 173a), die mit einem Lagewinkel mit Bezug auf eine vorbestimmte Richtung auf der ersten Leiterplatte angeordnet sind und Licht abgeben, und eine erste Lichtleiterplatte umfasst, die ein Lichteinfallteil, umfassend eine Einfallfläche, die von der LED-Lichtquelle abgegebenes Licht empfängt, und ein Lichtemissionsteil umfasst, das das Licht nach oben abgibt, und das zweite Modul eine zweite Leiterplatte, mehrere LED-Lichtquellen (113, 133, 173a), die mit einem Lagewinkel mit Bezug auf eine vorbestimmte Richtung auf der zweiten Leiterplatte angeordnet sind und Licht abgeben, und eine zweite Lichtleiterplatte umfasst, die ein Lichteinfallteil, umfassend eine Einfallfläche, die von der LED-Lichtquelle abgegebenes Licht empfängt, und ein Lichtemissionsteil umfasst, das das Licht nach oben abgibt, und wobei ein vorbestimmter Abschnitt des Lichtemissionsteils der Lichtleiterplatte des ersten Moduls eine Oberseite des Lichteinfallteils der Lichtleiterplatte des zweiten Moduls abdeckt.

3. LCD nach Anspruch 1 oder 2, wobei die Anschlussklemme auf einer gegenüberliegenden Seite der Leiterplatte mit den darauf angeordneten LED-Lichtquellen (113, 133, 173a) bereitgestellt ist.

4. LCD nach einem der vorhergehenden Ansprüche, wobei die Lichtleiterplatte eine Stufe umfasst, die durch einen Höhenunterschied zwischen der Oberseite des Lichteinfallteils und der Oberseite des Lichtemissionsteils gebildet wird.

5. LCD nach Anspruch 4, wobei die Dicke des Lichteinfallteils identisch mit der oder kleiner als die Dicke der Stufe ist.

6. LCD nach Anspruch 4, wobei die Dicke der Stufe identisch mit der oder größer als die Dicke des Endabschnitts des Lichtemissionsteils ist.

7. LCD nach Anspruch 1, wobei die Dicke der Lichtquelle identisch mit der oder kleiner als die Dicke des Lichteinfallteils ist.

8. LCD nach Anspruch 1, wobei mehrere Teile mit Aussparungen zum Einsetzen der Leiterplatte in dem Rahmen gebildet sind.

9. LCD nach Anspruch 8, wobei die in dem Rahmen gebildeten Verbindungslöcher (h) in dem Teil mit den Aussparungen gebildet sind.

10. LCD nach Anspruch 8, wobei das Teil mit den Aussparungen die Länge aufweist, die größer ist als die Breite, und die mehreren Teile mit Aussparungen parallel in einem vorbestimmten Intervall gebildet sind.

11. LCD nach Anspruch 10, wobei die mehreren Leiterplatten in ein Teil mit Aussparungen in Längsrichtung eingesetzt sind.

12. LCD nach Anspruch 8, wobei die in ein Teil mit Aussparungen eingesetzten Leiterplatten durchgehend derart angeordnet sind, dass beide Enden zweier benachbarter Leiterplatten aneinandergrenzen.

13. LCD nach Anspruch 8, wobei die LED-Lichtquelle angrenzend an eine Seite des Lichteinfallteils der Lichtleiterplatte angeordnet ist und die LED-Lichtquelle direkt an die horizontal angeordnete Leiterplatte montiert ist.

## Revendications

1. Dispositif d'affichage à cristaux liquides (LCD) comprenant :
une pluralité de modules (100), chaque module (100) comprenant une carte de circuits imprimés (114, 134, 173b), une pluralité de sources de lumière à diodes électroluminescentes (DEL) (113, 133, 173a) agencées sur la carte de circuits imprimés pour émettre une lumière, avec un angle d'orientation par rapport à une direction prédéterminée, et une plaque de guide de lumière (111, 131, 171) comprenant une partie d'incidence de lumière (111A, 172) comprenant une surface incidente recevant la lumière émise par la source de lumière à DEL et une partie d'émission de lumière émettant la lumière vers le haut, respectivement ;
un cadre (136, fr1, fr2, fr3) ayant une surface avant ayant la pluralité des modules (100) agencés sur celle-ci ;
**caractérisé par le fait que** le dispositif d'affichage à cristaux liquides comprend en outre :
au moins une unité de pilotage (410) agencée sur une surface arrière du cadre,
un trou de connexion (h) étant formé dans le cadre pour connecter la carte de circuits imprimés du module respectif (100) à l'unité de pilotage (410) ;
un câble (C) connectant la carte de circuits imprimés du module respectif (100) à l'unité de pilotage (410) par l'intermédiaire du trou de connexion (h) ; et
une borne de connexion (173c) à connecter au câble (C) étant disposée sur la carte de circuits imprimés et la borne de connexion (173c) étant positionnée de façon à correspondre au trou de connexion (h) formé dans le cadre (fr3).

2. LCD selon la revendication 1, dans lequel la pluralité des modules (100) comprend un premier module et un deuxième module agencés adjacents l'un à l'autre et le premier module comprend une première carte de circuits imprimés ; une pluralité de sources de lumière à DEL (113, 133, 173a) agencées sur la première carte de circuits imprimés émettant une lumière, avec un angle d'orientation par rapport à une direction prédéterminée ; et une première plaque de guide de lumière comprenant une partie d'incidence de lumière comprenant une surface incidente recevant la lumière émise par la source de lumière à DEL et une partie d'émission de lumière émettant la lumière vers le haut, et le deuxième module comprend une deuxième carte de circuits imprimés ; une pluralité de sources de lumière à DEL (113, 133, 173a) agencées sur la deuxième carte de circuits imprimés émettant une lumière, avec un angle d'orientation par rapport à une direction prédéterminée ; et une deuxième plaque de guide de lumière comprenant une partie d'incidence de lumière comprenant une surface incidente recevant la lumière émise par la source de lumière à DEL et une partie d'émission de lumière émettant la lumière vers le haut, et dans lequel une partie prédéterminée de la partie d'émission de lumière de la plaque de guide de lumière du premier module recouvre une surface supérieure de la partie d'incidence de lumière de la plaque de guide de lumière du deuxième module.

3. LCD selon la revendication 1 ou 2, dans lequel la borne de connexion est disposée sur un côté opposé de la carte de circuits imprimés ayant les sources de lumière à DEL (113, 133, 173a) agencées sur celui-ci.

4. LCD selon l'une quelconque des revendications précédentes, dans lequel la plaque de guide de lumière comprend une marche formée par une différence de hauteur entre la surface supérieure de la partie d'incidence de lumière et la surface supérieure de la partie d'émission de lumière.

5. LCD selon la revendication 4, dans lequel l'épaisseur de la partie d'incidence de lumière est identique ou inférieure à l'épaisseur de la marche.

6. LCD selon la revendication 4, dans lequel l'épaisseur de la marche est identique ou supérieure à l'épaisseur de la partie d'extrémité de la partie d'émission de lumière.

7. LCD selon la revendication 1, dans lequel l'épaisseur de la source de lumière est identique ou inférieure à l'épaisseur de la partie d'incidence de lumière.

8. LCD selon la revendication 1, dans lequel une pluralité de parties de renfoncement destinées à recevoir la carte de circuits imprimés dans celles-ci sont formées dans le cadre.

9. LCD selon la revendication 8, dans lequel les trous de connexion (h) formés dans le cadre sont formés dans la partie de renfoncement.

10. LCD selon la revendication 8, dans lequel la partie de renfoncement possède la longueur plus grande que la largeur et la pluralité des parties de renfoncement sont formées en parallèle à un intervalle prédéterminé.

11. LCD selon la revendication 10, dans lequel la pluralité des cartes de circuits imprimés sont reçues dans une partie de renfoncement dans une direction longitudinale.

12. LCD selon la revendication 8, dans lequel les cartes de circuits imprimés reçues dans une partie de renfoncement sont agencées de manière continue, de telle sorte que les deux extrémités de deux cartes de circuits imprimés voisines sont adjacentes l'une à l'autre.

13. LCD selon la revendication 8, dans lequel la source de lumière à DEL est agencée adjacente à un côté de la partie d'incidence de lumière de la plaque de guide de lumière et la source de lumière à DEL est montée directement sur la carte de circuits imprimés agencée horizontalement.
